# EUROPEAN PATENT APPLICATION

(11) **EP 4 600 327 A1**
(43) Date of publication of application: **13.08.2025**
(21) Application number: 23874778.6
(22) Date of filing: 29.09.2023
(51) Int. Cl.: C09K 15/32, C08K 5/13, C08K 5/524, C08L 101/00, C07F 9/145, C07F 9/6574

(54) **STABILIZER, ORGANIC MATERIAL COMPOSITION, AND ORGANIC MATERIAL STABILIZING METHOD**

(30) Priority: 03.10.2022 JP 2022159659
(71) Applicant: Sumitomo Chemical Company, Limited, Tokyo 103-6020 (JP)
(72) Inventor: MATSUOKA, Fumiaki, Osaka-shi, Osaka 554-8558 (JP)
(74) Representative: Vossius & Partner Patentanwälte Rechtsanwälte mbB
(86) International application number: PCT/JP2023/035694
(87) International publication number: WO 2024/075651

(57) **Abstract**

The present invention relates to a stabilizer including (A) a compound selected from the group consisting of a compound represented by formula (1): 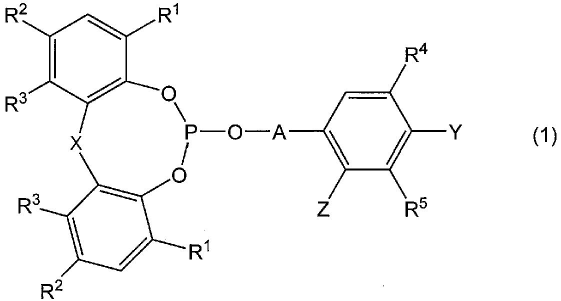 wherein
R¹, R², R⁴ and R⁵ each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group,
R³ each independently represents a hydrogen atom or an alkyl group having 1 to 8 carbon atoms,
X represents a single bond, a sulfur atom or a group -CH(-R¹³)-, wherein R¹³ represents a hydrogen atom, an alkyl group having 1 to 8 carbon atoms or a cycloalkyl group having 5 to 8 carbon atoms,
A represents an alkylene group having 1 to 8 carbon atoms or a group *-C(=O)-R¹⁴-, wherein R¹⁴ represents a single bond or an alkylene group having 1 to 8 carbon atoms, and * represents a bond to oxygen),
any one of Y and Z represents a hydroxyl group, an alkoxy group having 1 to 8 carbon atoms or an aralkyloxy group having 7 to 12 carbon atoms, and the other thereof represents a hydrogen atom or an alkyl group having 1 to 8 carbon atoms,

and a compound represented by formula (2): 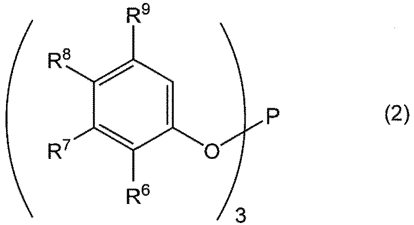 wherein
R⁶ and R⁸ each independently represent a hydrogen atom, a methyl group, or an alkyl group having 5 to 8 carbon atoms,
R⁷ each independently represents a hydrogen atom or a hydroxyl group,
R⁹ each independently represents a hydrogen atom or a group -C₁₅H₂₅₋₃₁,
provided that at least one R⁶, R⁷, R⁸ or R⁹ is not a hydrogen atom, and
(B) a compound represented by formula (3): 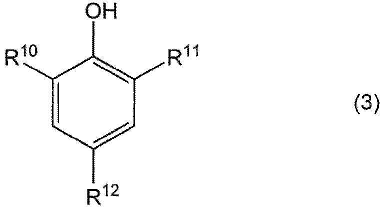 wherein R¹⁰, R¹¹ and R¹² each independently represent a hydrogen atom, an alkyl group having 1 to 12 carbon atoms, or an arylalkyl group having 7 to 20 carbon atoms in total, provided that at least one of R¹⁰, R¹¹ and R¹² is not a hydrogen atom, wherein
a content of the compound (B) is 0.01 to 50 parts by mass per 100 parts by mass of the compound (A).

## Description

### Technical Field

The present invention relates to a stabilizer and an organic material composition each including a specified compound, and a method for stabilizing an organic material using a specified compound.

### Background Art

Organic materials, such as thermoplastic resins, thermosetting resins, natural or synthetic rubbers, mineral oils, lubricating oils, adhesives, and paints, may deteriorate due to the action of heat, oxidizers typified by oxygen or ozone, and the others during production, during processing, and furthermore during use, and the commercial value thereof may be significantly impaired with a decrease in the strength and the physical properties of the organic materials, a change in their flowability, their coloration, a decrease in their surface properties, and the others due to phenomena such as cleaving and crosslinking of molecules.

For the purpose of preventing such deterioration due to heat and/or an oxidizer typified by oxygen or ozone, various phenol-based antioxidants and phosphorus-based antioxidants have been developed, and it is known that by adding these to organic materials, the organic materials can be stabilized (Patent Literature 1 and 2).

### Citation List

### Patent Literature

Patent Literature 1: Japanese Patent No. 3876479
Patent Literature 2: International Publication No. WO 2015/136717

### Summary of Invention

### Technical Problem

Organic materials are used in various environments, and may be exposed to, for example, combustion gases of fossil fuels, such as exhaust gases of automobiles. In such a case, the change in color of organic materials may be promoted by oxidized gas such as nitrogen oxide contained in the combustion gas. Although various stabilizers for organic materials have been heretofore known, there is not known any stabilizer sufficient for prevention of such a change in color. Accordingly, there is still a demand for a stabilizer which not only is effective for enhancing stability against heat and/or an oxidizer typified by oxygen during processing of an organic material, but also hardly causes the change in color due to oxidized gas such as NOx gas.

In Patent Literature 1, it is shown that phosphite compounds (Examples 1 to 10) according to Formula-1 to Formula-12 each corresponding to specified formula (I) cause less coloration due to NOx gas as compared with phosphite compounds of P-1 and P-3 (Comparative Examples 1 and 2) each not corresponding to the specified formula (I). However, the reducing effect of these compounds on coloration due to NOx gas is sometimes insufficient, and there is still a demand for providing further reduction in coloration.

In Patent Literature 2, a processing stabilizer including a compound represented by specified formula (I) and a compound represented by specified formula (II) is disclosed. However, there is no focus on any coloration due to NOx gas, and the stabilizer sometimes cannot reduce coloration due to NOx gas sufficiently.

Accordingly, an object of the present invention is to provide a stabilizer which not only is effective for an enhancement in stability during processing of an organic material, but also hardly causes the change in color due to oxidized gas, in particular, the change in color due to NOx gas.

### Solution to Problem

The present inventors have particularly made studies on various compounds in order to solve the above problems, and thus have found that a stabilizer including a specified compound is effective, thereby leading to completion of the present invention. Specifically, the present invention provides the following preferred aspects.
[1] A stabilizer including:
   (A) a compound selected from the group consisting of a compound represented by formula (1): 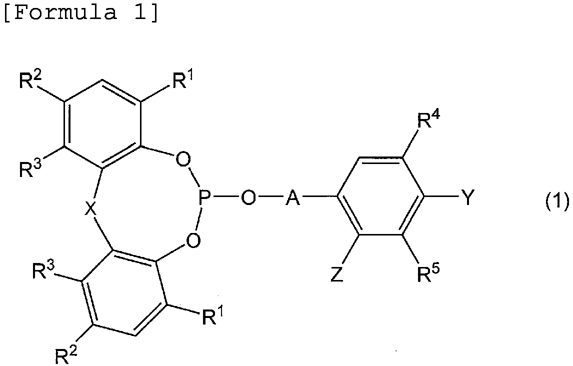 wherein
      R¹, R², R⁴ and R⁵ each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group,
      R³ each independently represents a hydrogen atom or an alkyl group having 1 to 8 carbon atoms,
      X represents a single bond, a sulfur atom or a group -CH(-R¹³)-, wherein R¹³ represents a hydrogen atom, an alkyl group having 1 to 8 carbon atoms or a cycloalkyl group having 5 to 8 carbon atoms,
      A represents an alkylene group having 1 to 8 carbon atoms or a group *-C(=O)-R¹⁴-, wherein R¹⁴ represents a single bond or an alkylene group having 1 to 8 carbon atoms, and * represents a bond to oxygen,
      any one of Y and Z represents a hydroxyl group, an alkoxy group having 1 to 8 carbon atoms or an aralkyloxy group having 7 to 12 carbon atoms, and the other thereof represents a hydrogen atom or an alkyl group having 1 to 8 carbon atoms,

      and a compound represented by formula (2): 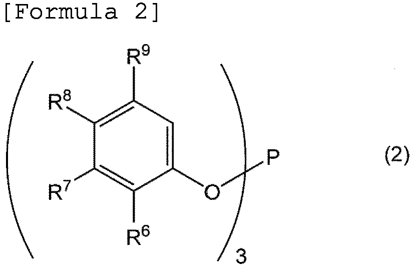
      wherein
      R⁶ and R⁸ each independently represent a hydrogen atom, a methyl group, or an alkyl group having 5 to 8 carbon atoms,
      R⁷ each independently represents a hydrogen atom or a hydroxyl group,
      R⁹ each independently represents a hydrogen atom or a group -C₁₅H₂₅₋₃₁,
      provided that at least one R⁶, R⁷, R⁸ or R⁹ is not a hydrogen atom, and
   (B) a compound represented by formula (3): 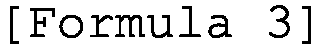 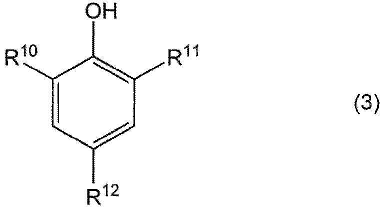 wherein R¹⁰, R¹¹ and R¹² each independently represent a hydrogen atom, an alkyl group having 1 to 12 carbon atoms, or an arylalkyl group having 7 to 20 carbon atoms in total, provided that at least one of R¹⁰, R¹¹ and R¹² is not a hydrogen atom, wherein
      a content of the compound (B) is 0.01 to 50 parts by mass per 100 parts by mass of the compound (A).
[2] The stabilizer according to [1], wherein, in formula (2),
   R⁶ each independently represents a hydrogen atom or a methyl group,
   R⁷ each independently represents a hydrogen atom or a hydroxyl group,
   R⁸ represents a hydrogen atom, and
   R⁹ each independently represents a group -C₁₅H₂₅₋₃₁.
[3] The stabilizer according to [1], wherein, in formula (2),
   R⁶ and R⁸ each independently represent a hydrogen atom or an alkyl group having 5 to 8 carbon atoms, provided that at least one R⁶ or R⁸ is not a hydrogen atom, and R⁷ and R⁹ represent a hydrogen atom.
[4] The stabilizer according to any one of [1] to [3], wherein, in formula (3), R¹¹ represents a hydrogen atom.
[5] An organic material composition including the compound (A) and the compound (B), or the stabilizer according to [1], and at least one organic material, wherein a content of the compound (B) is 0.01 to 50 parts by mass per 100 parts by mass of the compound (A).
[6] The organic material composition according to [5], wherein a content of the compound (A) is 0.01 to 1 part by mass per 100 parts by mass of the organic material, and a content of the compound (B) is 0.0001 to 0.5 parts by mass per 100 parts by mass of the organic material.
[7] The organic material composition according to [5] or [6], wherein the organic material is a thermoplastic resin.
[8] The organic material composition according to [7], wherein the thermoplastic resin is a polyolefin or an engineering plastic.
[9] A method for stabilizing an organic material, including adding the compound (A) and the compound (B) or the stabilizer according to [1] to an organic material, wherein a content of the compound (B) is 0.01 to 50 parts by mass per 100 parts by mass of the compound (A).
[10] The stabilizing method according to [9], wherein the organic material is a thermoplastic resin.
[11] The stabilizing method according to [10], wherein the thermoplastic resin is a polyolefin or an engineering plastic.

### Advantageous Effect of Invention

According to the present invention, it is possible to provide a stabilizer which not only is effective for enhancing stability during processing of an organic material, but also hardly causes the change in color due to oxidized gas, in particular, the change in color due to NOx gas. The organic material composition of the present invention not only has high stability, but also is hardly changed in color due to oxidized gas, in particular, is hardly changed in color due to NOx gas.

### Description of Embodiments

Embodiments of the present invention will be described in detail below. The scope of the present invention is not limited to the embodiments described here, and various changes can be made without departing from the spirit of the present invention. When a plurality of upper limit values and a plurality of lower limit values are described for a specified feature, any upper limit value and any lower limit value among these upper limit values and these lower limit values can be combined to provide a suitable numerical value range.

### [Stabilizer]

The stabilizer of the present invention is a stabilizer including (A) a compound selected from the group consisting of a compound represented by formula (1): 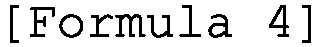 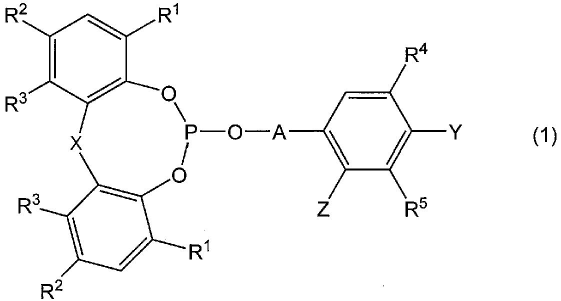 wherein
R¹, R², R⁴ and R⁵ each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group,
R³ each independently represents a hydrogen atom or an alkyl group having 1 to 8 carbon atoms,
X represents a single bond, a sulfur atom or a group -CH(-R¹³)-, wherein R¹³ represents a hydrogen atom, an alkyl group having 1 to 8 carbon atoms or a cycloalkyl group having 5 to 8 carbon atoms,
A represents an alkylene group having 1 to 8 carbon atoms or a group *-C(=O)-R¹⁴-, wherein R¹⁴ represents a single bond or an alkylene group having 1 to 8 carbon atoms, and * represents a bond to oxygen,
any one of Y and Z represents a hydroxyl group, an alkoxy group having 1 to 8 carbon atoms or an aralkyloxy group having 7 to 12 carbon atoms, and the other thereof represents a hydrogen atom or an alkyl group having 1 to 8 carbon atoms,

and a compound represented by formula (2): 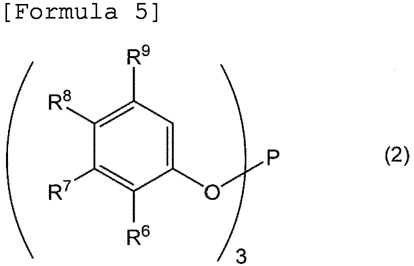
wherein
R⁶ and R⁸ each independently represent a hydrogen atom, a methyl group, or an alkyl group having 5 to 8 carbon atoms,
R⁷ each independently represents a hydrogen atom or a hydroxyl group,
R⁹ each independently represents a hydrogen atom or a group -C₁₅H₂₅₋₃₁,
provided that at least one R⁶, R⁷, R⁸ or R⁹ is not a hydrogen atom, and
   (B) a compound represented by formula (3): 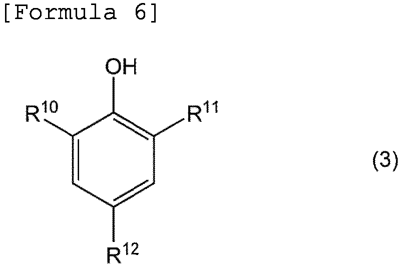
wherein R¹⁰, R¹¹ and R¹² each independently represent a hydrogen atom, an alkyl group having 1 to 12 carbon atoms, or an arylalkyl group having 7 to 20 carbon atoms in total, provided that at least one of R¹⁰, R¹¹ and R¹² is not a hydrogen atom, wherein
   a content of the compound (B) is 0.01 to 50 parts by mass per 100 parts by mass of the compound (A).

The stabilizer of the present invention, which includes the compound (A) selected from group consisting of the compound represented by formula (1) and the compound represented by formula (2), and the compound (B) represented by formula (3) and in which the content of the compound (B) is 0.01 to 50 parts by mass per 100 parts by mass of the compound (A), not only is effective for an enhancement in stability during processing of an organic material, but also hardly causes the change in color due to oxidized gas. Although the reason for this is not clear, the reason is inferred as follows: not only the compound (A) is effective for an enhancement in stability, but also interaction between the compound (A) and the compound (B), which co-exists therewith, inhibits change of the compound (A) into a colored substance. However, the present invention is not limited to the above mechanism at all.

### [Compound (A)]

The compound (A) included in the stabilizer of the present invention can be a compound represented by formula (1):

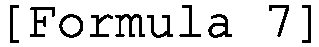

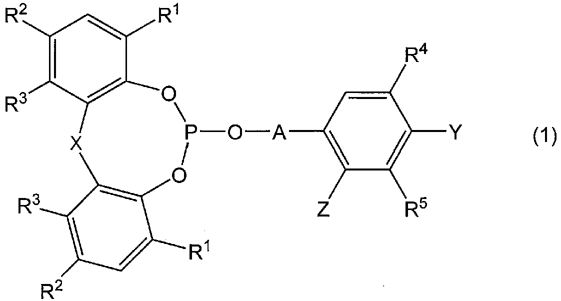

R¹, R², R⁴ and R⁵ in formula (1) each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group. A plurality of R¹ may be the same or different from each other. The same also applies to R² and R³.

Examples of the alkyl group having 1 to 8 carbon atoms include a methyl group, an ethyl group, a n-propyl group, an isopropyl group, a n-butyl group, a sec-butyl group, a t-butyl group, a n-pentyl group, a t-amyl group, a 2-methylbutyl group, a 3-methylbutyl group, a 2-ethylpropyl group, a n-hexyl group, a n-heptyl group, an isoheptyl group, a n-octyl group, an isooctyl group, and a 2-ethylhexyl group.

Examples of the cycloalkyl group having 5 to 8 carbon atoms include a cyclopentyl group, a cyclohexyl group, a cycloheptyl group and a cyclooctyl group.

Examples of the alkylcycloalkyl group having 6 to 12 carbon atoms include a 1-methylcyclopentyl group, a 1-methylcyclohexyl group and a 1-methyl-4-i-propylcyclohexyl group.

Examples of the aralkyl group having 7 to 12 carbon atoms include a benzyl group, an α-methylbenzyl group and an α,α-dimethylbenzyl group.

R¹, R² and R⁴ are each preferably an alkyl group having 1 to 8 carbon atoms, a cycloalkyl group having 5 to 8 carbon atoms, or an alkylcycloalkyl group having 6 to 12 carbon atoms.

R¹ and R⁴ are each more preferably a t-alkyl group such as a t-butyl group, a t-amyl group or a t-octyl group, a cyclohexyl group or a 1-methylcyclohexyl group.

R² is more preferably an alkyl group having 1 to 5 carbon atoms, such as a methyl group, an ethyl group, a n-propyl group, an i-propyl group, a n-butyl group, an i-butyl group, a sec-butyl group, a t-butyl group or a t-amyl group, and further preferably a methyl group, a t-butyl group, or a t-amyl group.

R⁵ is preferably a hydrogen atom, an alkyl group having 1 to 8 carbon atoms, or a cycloalkyl group having 5 to 8 carbon atoms, more preferably a hydrogen atom, or an alkyl group having 1 to 5 carbon atoms, such as a methyl group, an ethyl group, a n-propyl group, an i-propyl group, a n-butyl group, an i-butyl group, a sec-butyl group, a t-butyl group, or a t-amyl group.

R³ in formula (1) each independently represents a hydrogen atom or an alkyl group having 1 to 8 carbon atoms. Examples of the alkyl group having 1 to 8 carbon atoms include those as described above. R³ is preferably a hydrogen atom or an alkyl group having 1 to 5 carbon atoms, and more preferably a hydrogen atom or a methyl group.

X in formula (1) represents a single bond, a sulfur atom or a group -CH(-R¹³)-, wherein R¹³ represents a hydrogen atom, an alkyl group having 1 to 8 carbon atoms or a cycloalkyl group having 5 to 8 carbon atoms. Examples of the alkyl group having 1 to 8 carbon atoms represented by R¹³, and the cycloalkyl group having 5 to 8 carbon atoms include those as described above. X is preferably a methylene group substituted with an alkyl group having 1 to 4 carbon atoms, such as a methyl group, an ethyl group, a n-propyl group, an i-propyl group, a n-butyl group, an i-butyl group, or a t-butyl group, or a single bond, and more preferably a single bond.

A in formula (1) represents an alkylene group having 1 to 8 carbon atoms or a group *-C(=O)-R¹⁴-, wherein R¹⁴ represents a single bond or an alkylene group having 1 to 8 carbon atoms, and * represents a bond to oxygen. Examples of the alkylene group having 1 to 8 carbon atoms include a methylene group, an ethylene group, a propylene group, a butylene group, a pentamethylene group, a hexamethylene group, an octamethylene group and a 2,2-dimethyl-1,3-propylene group. A is preferably a propylene group. * in the group *-C(=O)-R¹⁴- means that the carbonyl group is bonded to the oxygen atom of the phosphite group. R¹⁴ is preferably a single bond or an ethylene group.

Any one of Y and Z in the formula (1) represents a hydroxyl group, an alkoxy group having 1 to 8 carbon atoms or an aralkyloxy group having 7 to 12 carbon atoms, and the other thereof represents a hydrogen atom or an alkyl group having 1 to 8 carbon atoms. Examples of the alkyl group having 1 to 8 carbon atoms include those as described above. Examples of the aralkyloxy group having 7 to 12 carbon atoms include a benzyloxy group, an α-methylbenzyloxy group and an α,α-dimethylbenzyloxy group. Preferably, any one of Y and Z is a hydroxyl group and the other thereof is a hydrogen atom or an alkyl group having 1 to 8 carbon atoms. More preferably, Y is a hydroxyl group and Z is a hydrogen atom or an alkyl group having 1 to 8 carbon atoms.

Specific examples of the compound represented by formula (1) include 2,4,8,10-tetra-t-butyl-6-[3-(3-methyl-4-hydroxy-5-t-butylphenyl)propoxy]dibenzo[d,f][1,3,2]dioxaphosphepine, 6-[3-(3,5-di-t-butyl-4-hydroxyphenyl)propoxy]-2,4,8,10-tetra-t-butyldibenzo[d,f][1,3,2]dioxaphosphepine, 6-[3-(3,5-di-t-butyl-4-hydroxyphenyl)propoxy]-4,8-di-t-butyl-2,10-dimethyl-12H-dibenzo[d,g][1,3,2]dioxaphosphocin, and 6-[3-(3,5-di-t-butyl-4-hydroxyphenyl)propionyloxy]-4,8-di-t-butyl-2,10-dimethyl-12H-dibenzo[d,g][1,3,2]dioxaphosphocin. The compound represented by formula (1) is preferably 2,4,8,10-tetra-t-butyl-6-[3-(3-methyl-4-hydroxy-5-t-butylphenyl)propoxyldibenzo[d,f][1,3,2]dioxaphosphepine.

A commercially available product can also be used as the compound represented by formula (1). Examples of the commercially available product include Sumilizer (R) GP (manufactured by Sumitomo Chemical Co., Ltd.).

The stabilizer of the present invention may include, as the compound (A), at least one compound selected from the group consisting of the compound represented by formula (1) and a compound represented by formula (2) described below, may include one compound represented by formula (1), may include two or more compounds represented by formula (1), may include one compound represented by formula (2), may include two or more compounds represented by formula (2), or may include both the compound represented by formula (1) and a compound represented by formula (2).

The compound (A) included in the stabilizer of the present invention can be a compound represented by formula (2):

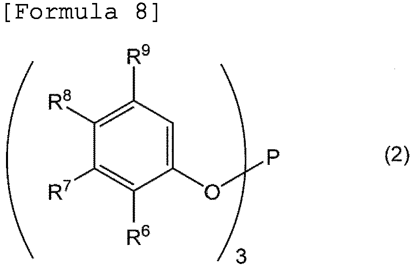

R⁶ and R⁸ in formula (2) each independently represent a hydrogen atom, a methyl group, or an alkyl group having 5 to 8 carbon atoms. Examples of the alkyl group having 5 to 8 carbon atoms include a n-pentyl group, a t-amyl group, a 2-methylbutyl group, a 3-methylbutyl group, a 2-ethylpropyl group, a n-hexyl group, a n-heptyl group, an isoheptyl group, a n-octyl group, an isooctyl group, and a 2-ethylhexyl group. A plurality of R⁶ may be the same or different from each other. The same also applies to R⁸.

R⁷ in formula (2) each independently represents a hydrogen atom or hydroxyl group. R⁷ may be the same or different from each other.

R⁹ in formula (2) each independently represents a hydrogen atom or a group -C₁₅H₂₅₋₃₁. R⁹ may be the same or different from each other. The group -C₁₅H₂₅₋₃₁ is a linear hydrocarbon group having 0 to 3 double bonds, and examples thereof include groups represented by the following formulas (R1-1) to (R1-4):

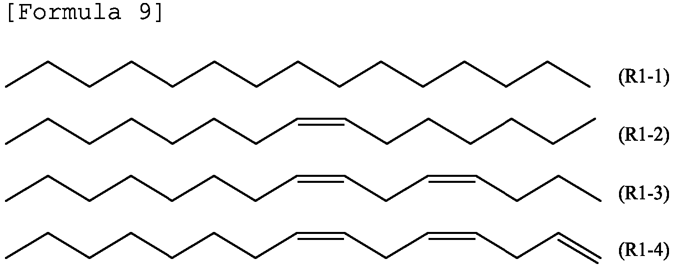

R⁶ to R⁹ in formula (2) each independently represent a hydrogen atom or the above-mentioned group, provided that at least one R⁶, R⁷, R⁸ or R⁹ is not a hydrogen atom. Here, at least one R⁶, R⁷, R⁸ or R⁹ being not a hydrogen atom means that at least one of 12 groups in total, in which there are three each of R⁶ to R⁹, is not a hydrogen atom.

In preferred one embodiment of the present invention, the compound represented by formula (2) is a compound in which, in formula (2), R⁶ each independently represents a hydrogen atom or a methyl group, R⁷ each independently represents a hydrogen atom or a hydroxyl group, R⁸ each represents a hydrogen atom, and R⁹ each independently represents a group -C₁₅H₂₅₋₃₁. The compound is a compound represented by formula (2-1): 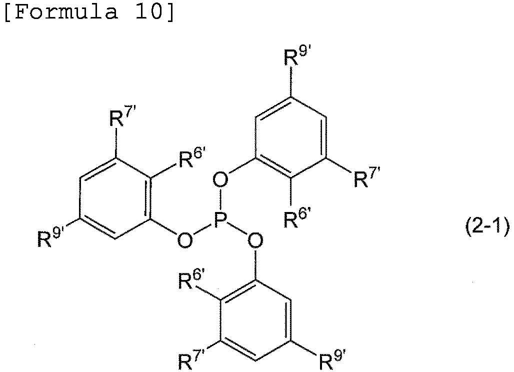 wherein
R^{6'} each independently represents a hydrogen atom or a methyl group,
R⁷' each independently represents a hydrogen atom or a hydroxyl group, and
R⁹' each independently represents a group -C₁₅H₂₅₋₃₁.

In one embodiment of the present invention, the compound represented by formula (2-1) is preferably derived from a cashew oil extract, in view of easily enhancing the effect of the stabilizer and in view of effectively utilizing an inedible site as resources. Examples of the cashew oil extract include cardanol, cardol, and methyl cardol included in cashew oil. The compound represented by formula (2-1) and derived from a cashew oil extract means that the compound represented by formula (2-1) is prepared from cardanol, cardol, and/or methyl cardol, which are cashew oil extracts, as starting materials.

In another preferred embodiment of the present invention, the compound represented by formula (2) is a compound in which, in formula (2), R⁶ and R⁸ each independently represent a hydrogen atom or an alkyl group having 5 to 8 carbon atoms; provided that at least one R⁶ or R⁸ is not a hydrogen atom, and R⁷ and R⁹ represents a hydrogen atom. The compound is a compound represented by formula (2-2): 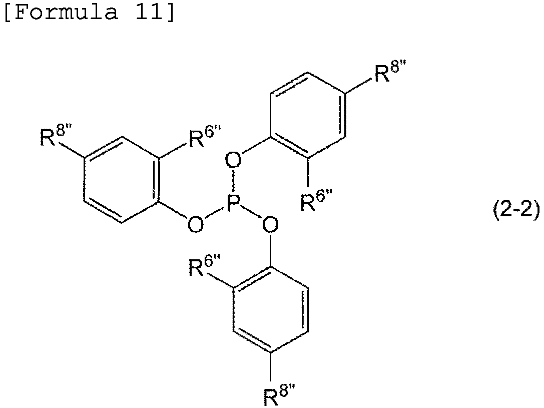 wherein
R^{6"} and R^{8"} each independently represent a hydrogen atom or an alkyl group having 5 to 8 carbon atoms, provided that at least one R⁶" or R⁸" is not a hydrogen atom. Examples of the alkyl group having 5 to 8 carbon atoms include groups described above for R⁶ and R⁸ in formula (2). R^{6"} and R^{8"} are each preferably a n-pentyl group, a t-amyl group, or a 2-methylbutyl group, and more preferably a t-amyl group.

Specific examples of the compound represented by formula (2-2) include Weston (R) 705 (manufactured by SI Group, Inc.).

### [Compound (B)]

The compound (B) included in the stabilizer of the present invention is a compound represented by formula (3): 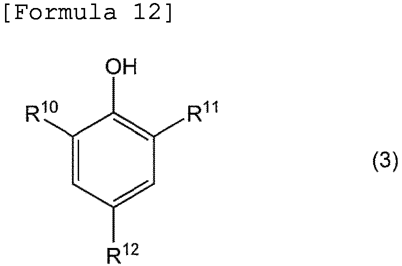 wherein R¹⁰, R¹¹ and R¹² each independently represent a hydrogen atom, an alkyl group having 1 to 12 carbon atoms, or an arylalkyl group having 7 to 20 carbon atoms in total, provided that at least one of R¹⁰, R¹¹ and R¹² is not a hydrogen atom. It has been surprisingly found that when the compound (B) co-exists with the compound (A), the change in color due to oxidized gas, in particular, the change in color due to NOx gas, can be effectively prevented. Although the reason for this is not clear, it is inferred that interaction between the compound (A) and the compound (B), which co-exists therewith, inhibits change of the compound (A) into a colored substance.

Examples of the alkyl group having 1 to 12 carbon atoms for R¹⁰, R¹¹ and R¹² in formula (3) include a methyl group, an ethyl group, a n-propyl group, an isopropyl group, a n-butyl group, a sec-butyl group, a t-butyl group, a n-pentyl group, a t-amyl group, a 2-methylbutyl group, a 3-methylbutyl group, a 2-ethylpropyl group, a n-hexyl group, a n-heptyl group, an isoheptyl group, a n-octyl group, an isooctyl group, and a 2-ethyl-hexyl group, a n-nonyl group, a decyl group, an undecyl group, and a dodecyl group. The alkyl group having 1 to 12 carbon atoms is preferably a methyl group, an isopropyl group, a t-butyl group, a t-amyl group, or a n-nonyl group, and more preferably a t-butyl group, a t-amyl group, or a n-nonyl group.

The arylalkyl group having 7 to 20 carbon atoms in total is an alkyl group having 7 to 20 carbon atoms in total in which at least one hydrogen atom is replaced with an aryl group (preferably a phenyl group). Examples of such a group include a group represented by -R¹⁵-Ar, wherein R¹⁵ is an alkylene group, and Ar is an aryl group, preferably a phenyl group. Examples of R¹⁵ include an alkylene group having 1 to 14 carbon atoms, specifically include a methylene group, an ethylene group, a propylene group (n-propylene group, a methylethylene group, a dimethylmethylene group), a butylene group, a pentamethylene group, a hexamethylene group, an octamethylene group and a 2,2-dimethyl-1,3-propylene group. Ar is, for example, a phenyl group or a naphthyl group in which a hydrogen atom is optionally replaced with an alkyl group, and preferably a phenyl group. Examples of the arylalkyl group having 7 to 20 carbon atoms in total include a benzyl group, a cumyl group, a 2-phenylethyl group, a 3-phenylpropyl group, a 4-phenylbutyl group, a 5-phenylpentyl group, a 6-phenylhexyl group, a 7-phenylheptyl group, an 8-phenyloctyl group, a 10-phenyldecyl group, a 12-phenyldodecyl group, a naphthylmethyl group and a naphthylethyl group, a benzyl group. A cumyl group and a 2-phenylethyl group are preferred, and a cumyl group is more preferred.

In preferred one embodiment of the present invention, R¹¹ in formula (3) represents a hydrogen atom in view of more easily preventing the change in color due to oxidized gas. It is considered that, when R¹¹ in the formula (3) represents a hydrogen atom, the compound (B) and the compound (A) easily interact to easily inhibit change of the compound (A) into a colored substance. In this case, R¹⁰ and R¹² in formula (3) each independently represent a hydrogen atom, an alkyl group having 1 to 12 carbon atoms, or an arylalkyl group having 7 to 20 carbon atoms in total, provided that at least one of R¹⁰ and R¹² is not a hydrogen atom. In this embodiment, R¹⁰ and R¹² in formula (3) are each preferably a hydrogen atom, a methyl group, an isopropyl group, a t-butyl group, a t-amyl group, or a n-nonyl group, a benzyl group, a cumyl group, or a 2-phenylethyl group, provided that at least one of R¹⁰ and R¹² is not a hydrogen atom. R¹⁰ and R¹² are each more preferably a t-butyl group, a t-amyl group, a n-nonyl group or a cumyl group.

The compound represented by formula (3) is specifically preferably a compound selected from the group consisting of 2-methylphenol, 4-methylphenol, 2,4-dimethylphenol, 2,6-dimethylphenol, 2,4,6-trimethylphenol, 2-ethylphenol, 4-ethylphenol, 2,4-diethylphenol, 2,6-diethylphenol, 2,4,6-triethylphenol, 2-phenylphenol, 4-phenylphenol, 2,4-diphenylphenol, 2,6-diphenylphenol, 2,4,6-triphenylphenol, 2,6-di-t-butyl-4-methylphenol, 2-t-butyl-4,6-dimethylphenol, 2,6-di-t-butyl-4-ethylphenol, 2,6-di-t-butyl-4-n-butylphenol, 2,6-di-t-butyl-4-isobutylphenol, 2,4,6-tri-t-butylphenol, 2,4-di-t-butylphenol, 2-t-butylphenol, 4-t-butylphenol, 2,4,6-tri-t-amylphenol, 2,4-di-t-amylphenol, 2-t-amylphenol, 4-t-amylphenol, 2,4,6-tricumylphenol, 2,4-dicumylphenol, 2-cumylphenol, 4-cumylphenol, 2,4,6-trinonylphenol, 2,4-dinonylphenol, 2-nonylphenol, and 4-nonylphenol. A compound selected from the group consisting of 2,4-di-t-butylphenol, 2-t-butylphenol, 4-t-butylphenol, 2,4,6-tri-t-amylphenol, 2,4-di-t-amylphenol, 2-t-amylphenol, 4-t-amylphenol, 2,4,6-tricumylphenol, 2,4-dicumylphenol, 2-cumylphenol, 4-cumylphenol, 2,4,6-trinonylphenol, 2,4-dinonylphenol, 2-nonylphenol and 4-nonylphenol is preferred, and a compound selected from the group consisting of 2,4-di-t-butylphenol, 2,4-di-t-amylphenol, 2-t-amylphenol, 4-t-amylphenol and 2,4-dicumylphenol is more preferred. The stabilizer of the present invention may include, as the compound (B), at least one compound represented by formula (3) described above, one compound represented by formula (3), or two or more compounds represented by the formula (3).

The stabilizer of the present invention includes the compound (A) and the compound (B), and the content of the compound (B) is 0.01 to 50 parts by mass per 100 parts by mass of the compound (A). When the content of the compound (B) is less than 0.01 parts by mass or more than 50 parts by mass per 100 parts by mass of the compound (A), the change in color due to oxidized gas cannot be sufficiently suppressed. The content of the compound (B) is preferably 0.1 to 50 parts by mass, more preferably 0.1 to 20 parts by mass, and further preferably 1 to 20 parts by mass, per 100 parts by mass of the compound (A) in the stabilizer of the present invention, in view of further enhancing the effect of preventing the change in color due to oxidized gas.

The content of the compound (B), per 100 parts by mass of the compound (A), in the stabilizer of the present invention may be calculated based on measurements using an analysis apparatus such as liquid chromatography, or may be calculated from the loading ratio in preparation of the stabilizer. When the content of the compound (B) is measured by liquid chromatography, the measurement is preferably performed in the following measurement conditions.

### <Measurement Conditions>

Column: Sumipax ODS A-212(6 mmφ × 150 mm, filler
diameter: 5 µm)
Column temperature: 40°C
Mobile phase:
   (A liquid) 0.1% by mass ammonium acetate/water
   (B liquid) 0.1% by mass ammonium acetate/methanol
Mobile phase gradient: 0 → 25 min (A liquid: 20 → 0% by mass (1% by mass/min), B liquid: 80 → 100% by mass (1% by mass/min)), 25 → 45 min (A liquid: 0% by mass, B
liquid: 100% by mass)
Flow rate: 1.0 mL/min
Detection method: UV (280 nm)
Sample concentration: 5 mg/mL
Amount of injection: 5 µL

The stabilizer of the present invention, which includes the compound (A) and a specified amount of the compound (B), can be added to an organic material such as a thermoplastic resin to enhance processing stability of the organic material. Furthermore, the stabilizer of the present invention can prevent the change in color due to oxidized gas. The stabilizer may be a material containing the compound (A) selected from the group consisting of the compound represented by formula (1) and the compound represented by formula (2), and the compound (B) represented by formula (3), at the above ratio, or may be a material further containing, in addition to the compound (A) and the compound (B), at least one of other additives which can be included in an organic material composition described below. The stabilizer of the present invention may be a material containing, in addition to the compound (A) and the compound (B), at least one organic material. Such a material is also referred to as, for example, master batch.

### [Organic material composition and method for stabilizing organic material]

The stabilizer of the present invention can be added to an organic material, or the compound (A) selected from the group consisting of the compound represented by formula (1) and the compound represented by formula (2) and the compound (B) represented by formula (3) can be added to an organic material at a specified ratio, to not only suppress degradation of the organic material and enhance processing stability thereof, but also prevent the change in color due to oxidized gas such as NOx gas. Therefore, the stabilizer of the present invention is suitable as a stabilizer for organic materials.

The present invention also provides a method for stabilizing an organic material, the method including adding the stabilizer, and a method for stabilizing an organic material, the method including adding the compound (A) and the compound (B) at a specified ratio. Furthermore, the present invention also provides a stabilized resin composition including an organic material, and the stabilizer of the present invention or the compound (A) and the compound (B) at a specified ratio.

Examples of an organic material which can be stabilized by the stabilizer of the present invention or the compounds (A) and (B) at a specified ratio include the following organic materials, but are not limited to these organic materials. The organic material may be one organic material or a mixture of two or more organic materials.
(1) Polyethylene, for example, high density polyethylene (HD-PE), low density polyethylene (LD-PE), and linear low density polyethylene (LLDPE),
(2) polypropylene,
(3) methylpentene polymers,
(4) EEA (ethylene/ethyl acrylate copolymer) resins,
(5) ethylene/vinyl acetate copolymer resins,
(6) polystyrenes, for example, polystyrene, poly(p-methylstyrene), and poly(α-methylstyrene),
(7) AS (acrylonitrile/styrene copolymer) resins,
(8) ABS (acrylonitrile/butadiene/styrene copolymer) resins,
(9) AAS (special acrylic rubber/acrylonitrile/styrene copolymer) resins,
(10) ACS (acrylonitrile/chlorinated polyethylene/styrene copolymer) resins,
(11) chlorinated polyethylene, polychloroprene, and chlorinated rubbers,
(12) polyvinyl chloride and polyvinylidene chloride,
(13) methacrylic resins,
(14) ethylene/vinyl alcohol copolymer resins,
(15) fluororesins,
(16) polyacetals,
(17) grafted polyphenylene ether resins and polyphenylene sulfide resins,
(18) polyurethanes,
(19) polyamides,
(20) polyester resins, for example, polyethylene terephthalate and polybutylene terephthalate,
(21) polycarbonates,
(22) polyacrylates,
(23) polysulfone, polyetheretherketone, and polyethersulfone,
(24) thermoplastic resins such as aromatic polyester resins,
(25) epoxy resins,
(26) diallyl phthalate prepolymers,
(27) silicone resins,
(28) unsaturated polyester resins,
(29) acrylic-modified benzoguanamine resins,
(30) benzoguanamine/melamine resins,
(31) thermosetting resins such as urea resins,
(32) polybutadiene,
(33) 1,2-polybutadiene,
(34) polyisoprene,
(35) styrene/butadiene copolymers,
(36) butadiene/acrylonitrile copolymers,
(37) ethylene/propylene copolymers,
(38) silicone rubbers,
(39) epichlorohydrin rubbers,
(40) acrylic rubbers,
(41) natural rubbers,
(42) chlorine rubber-based paints,
(43) polyester resin paints,
(44) urethane resin paints,
(45) epoxy resin paints,
(46) acrylic resin paints,
(47) vinyl resin paints,
(48) aminoalkyd resin paints,
(49) alkyd resin paints,
(50) nitrocellulose resin paints,
(51) oil paints,
(52) waxes,
(53) lubricating oils, and the like.

Among them, the stabilizer of the present invention or the compounds (A) and (B) at a specified ratio is preferably used for thermoplastic resins, in particular, polyethylene, for example, polyolefins such as HD-PE, LD-PE, LLDPE and polypropylene, engineering plastics such as polyamides, polyethylene terephthalate, polybutylene terephthalate, and polycarbonates.

The polyolefins are not particularly limited and may be, for example, those obtained by radical polymerization or those produced by polymerization using a catalyst containing a metal of group IVb, Vb, VIb, or VIII of the periodic table. Examples of the catalyst containing such a metal include metal complexes having one or more ligands, for example, oxides, halogen compounds, alcoholates, esters, or aryls coordinated by π or σ bonds. These complexes may be metal complexes as they are, or may be supported on carriers such as magnesium chloride, titanium chloride, alumina, or silicon oxide. As the polyolefins, those produced using, for example, a Ziegler-Natta catalyst, a TNZ catalyst, a metallocene catalyst, or the Phillips catalyst are preferably used.

The engineering plastics are not particularly limited either. The polyamide resins may be those that have an amide bond in the polymer chain and can be heated and melted. The polyamide resins may be those produced by any method, and examples of the polyamide resins include those produced by methods such as the condensation reactions of diamines and dicarboxylic acids, the condensation reactions of aminocarboxylic acids, and the ring-opening polymerization of lactams. Examples of the polyamide resins include nylon 66, nylon 69, nylon 610, nylon 612, poly-bis-(p-aminocyclohexyl)methane dodecamide, nylon 46, nylon 6, nylon 12, and copolymers such as nylon 66/6, which is a copolymer of nylon 66 and nylon 6, and nylon 6/12. The polyester resins may be those that have an ester bond in the polymer chain and can be heated and melted, and examples of the polyester resins include polyesters obtained by the polycondensation of dicarboxylic acids and dihydroxy compounds. The polyester resins may be either homopolyesters or copolyesters. The polycarbonate resins may be those that have a carbonate bond in the polymer chain and can be heated and melted, and examples of the polycarbonate resins include polycarbonates obtained by reacting a carbonate precursor such as phosgene or diphenyl carbonate with an aromatic hydroxy compound or an aromatic hydroxy compound and a small amount of a polyhydroxy compound in the presence of a solvent, an acid receptor, and a molecular weight adjusting agent. The polycarbonate resins may be linear or branched and may be copolymers.

A recycled resin of the organic material described above is also suitable as the organic material which can be stabilized by the stabilizer of the present invention or the compounds (A) and (B) at a specified ratio. Examples of such recycled resins include a recycled polyethylene resin, a recycled polypropylene resin, a recycled styrene-butadiene block copolymer, and a recycled propylene-ethylene block copolymer. The recycled resin here is, for example, one obtained by recycling a resin that has once shaped into a film or other form, and is, for example, often used in a pellet-like or powdery form processed from a shaped product such as a film.

Adding the stabilizer of the present invention to the recycled resin or adjusting the ratio of the compounds (A) and (B) in the resin so as to be in a specified range, and optionally adding a conventionally known stabilizer or the like to the resin, bring about the effect of not only stabilizing the recycled resin but also preventing the change in color of the resin due to oxidized gas. Examples of a composition including a recycled resin that can be stabilized and prevented from changing in color due to oxidized gas by such a method include the following recycled resin-containing compositions of compositions 1 to 24. Compounds used in preparations of the compositions are as follows.
Compound (A-1): 2,4,8,10-tetra-t-butyl-6-[3-(3-methyl-4-hydroxy-5-t-butylphenyl)propoxy]dibenzo[d,f][1,3,2]dioxaphosphepine (Sumilizer (R) GP, manufactured by Sumitomo Chemical Co., Ltd.)
Compound (A-2): phosphite compound obtained in Production Example 1 of Examples in the present specification
Compound (D): 2,2'-dimethyl-2,2'-(2,4,8,10-tetraoxaspiro[5.5]undecane-3,9-diyl)dipropan-1,1'-diyl=bis[3-(3-t-butyl-4-hydroxy-5-methylphenyl)propanoate] (Sumilizer (R) GA-80, manufactured by Sumitomo Chemical Co., Ltd.)
Compound (E): 2-t-butyl-6-(3-t-butyl-2-hydroxy-5-methylbenzyl)-4-methylphenyl acrylate (Sumilizer (R) GM, manufactured by Sumitomo Chemical Co., Ltd.)
Compound (F): 2-[1-(2-hydroxy-3,5-di-t-pentylphenyl)ethyl]-4,6-di-t-pentylphenyl acrylate (Sumilizer (R) GS, manufactured by Sumitomo Chemical Co., Ltd.)
Compound (G): 4,4'-thiobis(2-t-butyl-5-methylphenol) (Sumilizer (R) WX-R, manufactured by Sumitomo Chemical Co., Ltd.)

### (Preparation of composition 1)

100 Parts by mass of a recycled polyethylene resin (MI value: 2 g/10 min, manufactured by Nissen Polytec Corporation), 0.05 parts by mass of calcium stearate (manufactured by Nitto Chemical Industry Co., Ltd.), and 0.1 parts by mass of the compound (A-1) were dry-blended, and the obtained mixture was kneaded under a nitrogen atmosphere under the conditions of a temperature of 190°C and a screw rotation speed of 80 rpm using a twin-screw extruder having a cylinder diameter of 32 mm (BTN-32, PLABOR) to obtain pellets of a composition 1.

### (Preparation of compositions 2 to 6)

Pellets of compositions 2 to 6 were obtained in the same manner as in the preparation method of the composition 1 except that the compound (A-2), the compound (D), the compound (E), the compound (F), and the compound (G) were used for the composition 2, the composition 3, the composition 4, the composition 5, and the composition 6, respectively, instead of the compound (A-1) used in preparation of the composition 1.

The melt flow rates (MFRs) of the above pellets of the compositions 1 to 6 were each measured under the conditions of a temperature of 190°C and a load of 21.18 N using a melt indexer (model L246-3537, manufactured by TECHNOL SEVEN CO., LTD.), and as a result, were found to be 2.10 g/10 min (composition 1), 2.11 g/10 min (composition 2), 2.08 g/10 min (composition 3), 2.12 g/10 min (composition 4), 2.14 g/10 min (composition 5), and 2.11 g/10 min (composition 6). The MFR of each of compositions 7 to 24 described below can also be measured in the same manner.

### (Preparation of composition 7)

100 Parts by mass of a recycled polypropylene resin, 0.05 parts by mass of calcium stearate (manufactured by Nitto Chemical Industry Co., Ltd.), and 0.0500 parts by mass of the compound (A-1) are dry-blended, and the obtained mixture is kneaded under a nitrogen atmosphere under the conditions of a temperature of 220°C and a screw rotation speed of 80 rpm using a twin-screw extruder having a cylinder diameter of 32 mm (BTN-32, PLABOR) to obtain pellets of a composition 7.

### (Preparation of compositions 8 to 12)

Pellets of compositions 8 to 12 are obtained in the same manner as in the preparation method of the composition 7 except that the compound (A-2), the compound (D), the compound (E), the compound (F), and the compound (G) are used for the composition 8, the composition 9, the composition 10, the composition 11, and the composition 12, respectively, instead of the compound (A-1) used in preparation of the composition 7.

### (Preparation of compositions 13 to 18)

Pellets of compositions 13 to 18 are obtained in the same manner as in the respective preparation methods of the compositions 7 to 12 except that a recycled styrene-butadiene block copolymer is used instead of the recycled polypropylene resin used in preparation of the composition 7. Here, the composition 13 includes the compound (A-1), the composition 14 includes the compound (A-2), the composition 15 includes the compound (D), the composition 4 includes the compound (E), the composition 5 includes the compound (F), and the composition 6 includes the compound (G).

### (Preparation of compositions 19 to 24)

Pellets of compositions 19 to 24 are obtained in the same manner as in the respective preparation methods of the compositions 7 to 12 except that a recycled propylene-ethylene block copolymer is used instead of the recycled polypropylene resin used in preparation of the composition 7. Here, the composition 19 includes the compound (A-1), the composition 20 includes the compound (A-2), the composition 21 includes the compound (D), the composition 22 includes the compound (E), the composition 23 includes the compound (F), and the composition 24 includes the compound (G).

The compound (A) selected from the group consisting of the compound represented by formula (1) and the compound represented by formula (2), and the compound (B) represented by formula (3) can be added to an organic material at a specified ratio, to not only enhance the processing stability of the organic material, but also prevent the change in color of the organic material due to oxidized gas. In this case, the compound (A) and the compound (B) are added to the organic material in amounts such that the content of the compound (B) is 0.01 to 50 parts by mass per 100 parts by mass of the compound (A). The content of the compound (B) is preferably 0.1 to 50 parts by mass, more preferably 0.1 to 20 parts by mass, and further preferably 1 to 20 parts by mass, per 100 parts by mass of the compound (A), in view of easily enhancing the effect of preventing the change in color due to oxidized gas by combination use of the compound (A) and the compound (B).

The compound (A) selected from the group consisting of the compound represented by formula (1) and the compound represented by formula (2), and the compound (B) represented by formula (3) may be added to the organic material by addition of the stabilizer of the present invention. In any case, the compound (A) and the compound (B) are included in a specified quantitative ratio in the organic material.

When the stabilizer of the present invention, or the compound (A) selected from the group consisting of the compound represented by formula (1) and the compound represented by formula (2), and the compound (B) represented by formula (3) are added to the organic material to stabilize the organic material, the content of the compound (A) is preferably 0.01 to 1 part by mass, more preferably 0.02 to 0.3 parts by mass, and further preferably 0.03 to 0.1 parts by mass, per 100 parts by mass of the organic material, in view of stabilization of the organic material and prevention of the change in color due to oxidized gas. The content of the compound (B) is preferably 0.0001 to 0.5 parts by mass, more preferably 0.0002 to 0.15 parts by mass, further preferably 0.0003 to 0.05 parts by mass, and further preferably 0.0005 to 0.01 parts by mass, per 100 parts by mass of the organic material, from the same viewpoint.

The total mass of the compound (A) and the compound (B) is preferably 0.005 parts by mass or more, more preferably 0.01 parts by mass or more, and further preferably 0.05 parts by mass or more, per 100 parts by mass of the organic material, in view of stabilization of the organic material and prevention of the change in color due to oxidized gas. The total mass of the compound (A) and the compound (B) is usually 5 parts by mass or less, preferably 3 parts by mass or less, and more preferably 1 part by mass or less, per 100 parts by mass of the organic material, in view of efficient stabilization of the organic material and from an economical viewpoint.

When the compound (A) selected from the group consisting of the compound represented by formula (1) and the compound represented by formula (2), and the compound (B) represented by formula (3) are added to the organic material, other additives can also be added to the organic material, if necessary, including sulfur-based antioxidants, phosphorus-based antioxidants, age resisters, ultraviolet absorbing agents, light stabilizers, peroxide scavengers, polyamide stabilizers, hydroxyamine, lubricants, plasticizers, flame retardants, nucleating agents, metal deactivators, antistatic agents, pigments, fillers, antiblocking agents, surfactants, processing aids, foaming agents, emulsifiers, brighteners, calcium stearate, neutralizing agents such as hydrotalcite, furthermore coloration improving agents such as 9,10-dihydro-9-oxa-10-phosphophenanthrene-10-oxide, and auxiliary stabilizers such as benzofurans and indolines disclosed in U.S. Patent Nos. 4,325,853, 4,338,244, 5,175,312, 5,216,053, 5,252,643, 4,316,611, DE-A-4,316,622 and 4,316,876, EP-A-589,839, and EP-A-591,102. These additives can be added to the organic material at the same time as addition of the compounds (A) and (B) included in the stabilizer of the present invention, or can be added to the organic material at a different stage from addition of the compounds (A) and (B) included in the stabilizer of the present invention. The additives may be used singly or in combinations of two or more thereof.

Examples of the phenol-based antioxidants include the following. As such a phenol-based antioxidant, the following compounds may be used singly, or in combinations of two or more thereof. It is noted that any compound corresponding to formula (3) is excluded.
(1) Examples of Alkylated Monophenols
   2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-t-butyl-4-methoxymethylphenol, 2,4-dimethyl-6-(1'-methylundecyl-1'-yl)phenol, 2,4-dimethyl-6-(1'-methylheptadecyl-1'-yl)phenol, 2,4-dimethyl-6-(1'-methyltridecyl-1'-yl)phenol, and mixtures thereof, and the like.
(2) Examples of Alkylthiomethylphenols
   2,4-Dioctylthiomethyl-6-t-butylphenol, 2,4-dioctylthiomethyl-6-methylphenol, 2,4-dioctylthiomethyl-6-ethylphenol, 2,6-didodecylthiomethyl-4-nonylphenol, and mixtures thereof, and the like.
(3) Examples of Hydroquinones and Alkylated Hydroquinones
   2,6-Di-t-butyl-4-methoxyphenol, 2,5-di-t-butylhydroquinone, 2,5-di-t-amylhydroquinone, 2,6-diphenyl-4-octadecyloxyphenol, 2,6-di-t-butylhydroquinone, 2,5-di-t-butyl-4-hydroxyanisole, 3,5-di-t-butyl-4-hydroxyphenyl stearate, bis(3,5-di-t-butyl-4-hydroxyphenyl) adipate, and mixtures thereof, and the like.
(4) Examples of Tocopherols
   α-Tocopherol, β-tocopherol, γ-tocopherol, δ-tocopherol, and mixtures thereof, and the like.
(5) Examples of Hydroxylated Thiodiphenyl Ethers
   2,2'-Thiobis(6-t-butylphenol), 2,2'-thiobis(4-methyl-6-t-butylphenol), 2,2'-thiobis(4-octylphenol), 4,4'-thiobis(3-methyl-6-t-butylphenol), 4,4'-thiobis(2-methyl-6-t-butylphenol), 4,4'-thiobis(3,6-di-t-amylphenol), 4,4'-(2,6-dimethyl-4-hydroxyphenyl) disulfide, and the like.
(6) Examples of Alkylidene Bisphenols and Derivatives Thereof
   2,2'-Methylenebis(4-methyl-6-t-butylphenol), 2,2'-methylenebis(4-ethyl-6-t-butylphenol), 2,2'-methylenebis[4-methyl-6-(α-methylcyclohexyl)phenol)], 2,2'-methylenebis(4-methyl-6-cyclohexylphenol), 2,2'-methylenebis(4-methyl-6-nonylphenol), 2,2'-methylenebis(4,6-di-t-butylphenol), 2,2'-ethylidenebis(4,6-di-t-butylphenol), 2,2'-ethylidenebis(4-isobutyl-6-t-butylphenol), 2,2'-methylenebis[6-(α-methylbenzyl)-4-nonylphenol], 2,2'-methylenebis[4,6-(α,α-dimethylbenzyl)-4-nonylphenol], 4,4'-methylenebis(6-t-butyl-2-methylphenol), 4,4'-methylenebis(2,6-di-t-butylphenol), 4,4'-butylidenebis(3-methyl-6-t-butylphenol), 1,1-bis(4-hydroxyphenyl)cyclohexane, 1,1-bis(5-t-butyl-4-hydroxy-2-methylphenyl)butane, 2,6-bis(3-t-butyl-5-methyl-2-hydroxybenzyl)-4-methylphenol, 1,1,3-tris(5-t-butyl-4-hydroxy-2-methylphenyl)butane, 1,1-bis(5-t-butyl-4-hydroxy-2-methylphenyl)-3-n-dodecylmercaptobutane, ethylene glycol bis[3,3-bis-3'-t-butyl-4'-hydroxyphenyl) butyrate], bis(3-t-butyl-4-hydroxy-5-methylphenyl)dicyclopentadiene, bis[2-(3'-t-butyl-2'-hydroxy-5'-methylbenzyl)-6-t-butyl-4-methylphenyl] terephthalate, 1,1-bis(3,5-dimethyl-2-hydroxyphenyl)butane, 2,2-bis(3,5-di-t-butyl-4-hydroxyphenyl)propane, 2,2-bis(5-t-butyl-4-hydroxy-2-methylphenyl)-4-n-dodecylmercaptobutane, 1,1,5,5-tetra(5-t-butyl-4-hydroxy-2-methylphenyl)pentane, 2-t-butyl-6-(3'-t-butyl-5'-methyl-2'-hydroxybenzyl)-4-methylphenyl acrylate, 2,4-di-t-pentyl-6-[1-(2-hydroxy-3,5-di-t-pentylphenyl)ethyl]phenyl acrylate, and mixtures thereof, and the like.
(7) Examples of O-, N-, and S-Benzyl Derivatives
   3,5,3',5'-Tetra-t-butyl-4,4'-dihydroxydibenzyl ether, octadecyl-4-hydroxy-3,5-dimethylbenzylmercaptoacetate, tris(3,5-di-t-butyl-4-hydroxybenzyl)amine, bis(4-t-butyl-3-hydroxy-2,6-dimethylbenzyl) dithioterephthalate, bis(3,5-di-t-butyl-4-hydroxybenzyl) sulfide, isooctyl-3,5-di-t-butyl-4-hydroxybenzylmercaptoacetate, and mixtures thereof, and the like.
(8) Examples of Hydroxybenzylated Malonate Derivatives
   Dioctadecyl-2,2-bis(3,5-di-t-butyl-2-hydroxybenzyl) malonate, dioctadecyl-2-(3-t-butyl-4-hydroxy-5-methylbenzyl) malonate, didodecylmercaptoethyl-2,2-bis(3,5-di-t-butyl-4-hydroxybenzyl) malonate, bis[4-(1,1,3,3-tetramethylbutyl)phenyl]-2,2-bis(3,5-di-t-butyl-4-hydroxybenzyl) malonate, and mixtures thereof, and the like.
(9) Examples of Aromatic Hydroxybenzyl Derivatives
   1,3,5-Trimethyl-2,4,6-tris(3,5-di-t-butyl-4-hydroxybenzyl) benzene, 1,4-bis(3,5-di-t-butyl-4-hydroxybenzyl)-2,3,5,6-tetramethylbenzene, 2,4,6-tris(3,5-t-butyl-4-hydroxybenzyl)phenol, and mixtures thereof, and the like.
(10) Examples of Triazine Derivatives
   2,4-Bis(n-octylthio)-6-(4-hydroxy-3,5-di-t-butylanilino)-1,3,5-triazine, 2-n-octylthio-4,6-bis(4-hydroxy-3,5-di-t-butylanilino)-1,3,5-triazine, 2-n-octylthio-4,6-bis(4-hydroxy-3,5-di-t-butylphenoxy)-1,3,5-triazine, 2,4,6-tris(3,5-di-t-butyl-4-phenoxy)-1,3,5-triazine, tris(4-t-butyl-3-hydroxy-2,6-dimethylbenzyl) isocyanurate, tris(3,5-di-t-butyl-4-hydroxybenzyl) isocyanurate, 2,4,6-tris(3,5-di-t-butyl-4-hydroxyphenylethyl)-1,3,5-triazine, 2,4,6-tris(3,5-di-t-butyl-4-hydroxyphenylpropyl)-1,3,5-triazine, tris(3,5-dicyclohexyl-4-hydroxybenzyl) isocyanurate, tris[2-(3',5'-di-t-butyl-4'-hydroxycinnamoyloxy)ethyl] isocyanurate, and mixtures thereof, and the like.
(11) Examples of Benzylphosphonate Derivatives
   Dimethyl-3,5-di-t-butyl-4-hydroxybenzylphosphonate, diethyl-3,5-di-t-butyl-4-hydroxybenzylphosphonate, dioctadecyl-3,5-di-t-butyl-4-hydroxybenzylphosphonate, dioctadecyl-5-t-butyl-4-hydroxy-3-methylbenzylphosphonate, a calcium salt of 3,5-di-t-butyl-4-hydroxybenzylphosphonic acid monoester, and mixtures thereof, and the like.
(12) Examples of Acylaminophenol Derivatives
   4-Hydroxylauric acid anilide, 4-hydroxystearic acid anilide, octyl-N-(3,5-di-t-butyl-4-hydroxyphenyl) carbamate, and mixtures thereof, and the like.
(13) Examples of Esters of β-(3,5-Di-t-butyl-4-hydroxyphenyl)propionic Acid and Following Monohydric or Polyhydric Alcohols
   Methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiroglycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane, and mixtures thereof, and the like.
(14) Examples of Esters of β-(5-t-Butyl-4-hydroxy-3-methylphenyl)propionic Acid and Following Monohydric or Polyhydric Alcohols
   Methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiroglycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane, and mixtures thereof, and the like.
(15) Examples of Esters of β-(3,5-Dicyclohexyl-4-hydroxyphenyl)propionic Acid and Following Monohydric or Polyhydric Alcohols
   Methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiroglycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane, and mixtures thereof, and the like.
(16) Examples of Esters of 3,5-Di-t-butyl-4-hydroxyphenylacetic Acid and Following Monohydric or Polyhydric Alcohols
   Methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiroglycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane, and mixtures thereof, and the like.
(17) Examples of Amide of β-(3,5-di-t-butyl-4-hydroxyphenyl)propionic acid
   N,N'-bis[3-(3',5'-di-t-butyl-4'-hydroxyphenyl)propionyl]hydrazine, N,N'-bis[3-(3',5'-dit-butyl-4'-hydroxyphenyl)propionyl]hexamethylenediamine, N,N'-bis[3-(3',5'-di-t-butyl-4'-hydroxyphenyl)propionyl]trimethylenediamine and mixtures thereof, and the like.

Examples of the sulfur-based antioxidants include the following.

Dilauryl 3,3'-thiodipropionate, tridecyl 3,3'-thiodipropionate, dimyristyl 3,3'-thiodipropionate, distearyl 3,3'-thiodipropionate, lauryl stearyl 3,3'-thiodipropionate, neopentanetetrayl tetrakis(3-laurylthiopropionate), and the like.

Examples of the phosphorus-based antioxidants include the following. As the phosphorus-based antioxidant, the following compounds may be used singly, or two or more may be used in combination.

Triphenyl phosphite, tris(nonylphenyl) phosphite, tris(2,4-di-t-butylphenyl) phosphite, trilauryl phosphite, trioctadecyl phosphite, distearyl pentaerythritol diphosphite, diisodecyl pentaerythritol diphosphite, bis(2,4-di-t-butylphenyl) pentaerythritol diphosphite, bis(2,4-di-t-butyl-6-methylphenyl) pentaerythritol diphosphite, bis(2,6-di-t-butyl-4-methylphenyl) pentaerythritol diphosphite, bis(2,4,6-tri-t-butylphenyl) pentaerythritol diphosphite, tristearyl sorbitol triphosphite, tetrakis(2,4-di-t-butylphenyl)-4,4'-diphenylene diphosphonite, 2,2'-methylenebis(4,6-di-t-butylphenyl) 2-ethylhexyl phosphite, 2,2'-ethylidenebis(4,6-di-t-butylphenyl) fluorophosphite, bis(2,4-di-t-butyl-6-methylphenyl) ethyl phosphite, bis(2,4-di-t-butyl-6-methylphenyl) methyl phosphite, 2-(2,4,6-tri-t-butylphenyl)-5-ethyl-5-butyl-1,3,2-oxaphosphorinane, 2,2',2''-nitrilo[triethyl-tris(3,3',5,5'-tetra-t-butyl-1,1'-biphenyl-2,2'-diyl) phosphite, 6-[3-(3-t-butyl-4-hydroxy-5-methylphenyl)propoxy]-2,4,8,10-tetra-t-butyldibenzo[d,f][1,3,2]dioxaphosphepin, and mixtures thereof, and the like.

Examples of the age resisters include quinoline-based age resisters such as polymers of 2,2,4-trimethyl-1,2-dihydroquinoline; monophenol-based age resisters such as 2,6-di-t-butyl-4-methylphenol and styrenated phenol; and bis-, tris-, and polyphenol-based age resisters such as tetrakis-[methylene-3-(3',5'-di-t-butyl-4'-hydroxyphenyl) propionate]methane. These may be used singly, or two or more may be used in combination. Among them, quinoline-based age resisters are preferred.

Examples of the ultraviolet absorbing agent include the following. As the ultraviolet absorbing agent, the following compounds may be used singly, or two or more may be used in combination.
(1) Examples of Salicylate Derivatives
   phenyl salicylate, 4-t-butylphenyl salicylate, 2,4-di-t-butylphenyl 3',5'-di-t-butyl-4'-hydroxybenzoate, 4-t-octylphenyl salicylate, bis(4-t-butylbenzoyl)resorcinol, benzoylresorcinol, hexadecyl 3',5'-di-t-butyl-4'-hydroxybenzoate, octadecyl 3',5'-di-t-butyl-4'-hydroxybenzoate, 2-methyl-4,6-di-t-butylphenyl 3',5'-dit-butyl-4'-hydroxybenzoate and mixtures thereof, and the like.
(2) Examples of 2-Hydroxybenzophenone Derivatives
   2,4-Dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone, and mixtures thereof, and the like.
(3) Examples of 2-(2'-Hydroxyphenyl)benzotriazoles
   2-(2-Hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-s-butyl-2'-hydroxy-5'-t-butylphenyl)benzotriazole, 2-(2'-hydroxy-4'-octyloxyphenyl)benzotriazole, 2-(3',5'-di-t-amyl-2'-hydroxyphenyl)benzotriazole, 2-[2'-hydroxy-3',3'-bis(α,α-dimethylbenzyl)phenyl]-2H-benzotriazole, 2-[(3'-t-butyl-2'-hydroxyphenyl)-5'-(2-octyloxycarbonylethyl)phenyl]-5-chlorobenzotriazole, 2-[3'-t-butyl-5'-[2-(2-ethylhexyloxy)carbonylethyl]-2'-hydroxyphenyl]-5-chlorobenzotriazole, 2-[3'-t-butyl-3'-hydroxy-5'-(2-methoxycarbonylethyl)phenyl]-5-chlorobenzotriazole, 2-[3'-t-butyl-2'-hydroxy-5'-(2-methoxycarbonylethyl)phenyl]benzotriazole, 2-[3'-t-butyl-2'-hydroxy-5-(2-octyloxycarbonylethyl)phenyl]benzotriazole, 2-[3'-t-butyl-2'-hydroxy-5'-[2-(2-ethylhexyloxy)carbonylethyl]phenyl]benzotriazole, 2-[2-hydroxy-3-(3,4,5,6-tetrahydrophthalimidomethyl)-5-methylphenyl]benzotriazole, 2-(3,5-di-t-butyl-2-hydroxyphenyl)-5-chlorobenzotriazole, mixtures of 2-(3'-dodecyl-2'-hydroxy-5'-methylphenyl)benzotriazole and 2-[3'-t-butyl-2'-hydroxy-5'-(2-isooctyloxycarbonylethyl)phenyl]benzotriazole, 2,2'-methylenebis[6-(2H-benzotriazol-2-yl)-4-(1,1,3,3-tetramethylbutyl) phenol, 2,2'-methylenebis[4-t-butyl-6-(2H-benzotriazol-2-yl)phenol], condensates of poly(3 to 11) (ethylene glycol) and 2-[3'-t-butyl-2'-hydroxy-5'-(2-methoxycarbonylethyl)phenyl]benzotriazole, condensates of poly(3 to 11) (ethylene glycol) and methyl 3-[3-(2H-benzotriazol-2-yl)-5-t-butyl-4-hydroxyphenyl] propionate, 2-ethylhexyl 3-[3-t-butyl-5-(5-chloro-2H-benzotriazol-2-yl)-4-hydroxyphenyl] propionate, octyl 3-[3-t-butyl-5-(5-chloro-2H-benzotriazol-2-yl)-4-hydroxyphenyl] propionate, methyl 3-[3-t-butyl-5-(5-chloro-2H-benzotriazol-2-yl)-4-hydroxyphenyl] propionate, 3-[3-t-butyl-5-(5-chloro-2H-benzotriazol-2-yl)-4-hydroxyphenyl]propionic acid, and mixtures thereof, and the like.

Examples of the light stabilizers include the following. As the light stabilizer, the following compounds may be used singly, or two or more may be used in combination.
(1) Examples of Hindered Amine-Based Light Stabilizer
   bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(N-octoxy-2,2,6,6-tetramethyl-4-piperidyl)sebacate, bis(N-benzyloxy-2,2,6,6-tetramethyl-4-piperidyl)sebacate, bis(N-cyclohexyloxy-2,2,6,6-tetramethyl-4-piperidyl)sebacate, bis(1,2,2,6,6-pentamethyl-4-piperidyl)2-(3,5-di-t-butyl-4-hydroxybenzyl)-2-butyl malonate, bis(1-acroyl-2,2,6,6-tetramethyl-4-piperidyl)2,2-bis(3,5-di-t-butyl-4-hydroxybenzyl)-2-butyl malonate, bis(1,2,2,6,6-pentamethyl-4-piperidyl)decanedioate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2,6,6-tetramethylpiperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate, and a mixed esterified product of 1,2,3,4-butanetetracarboxylic acid with 1,2,2,6,6-pentamethyl-4-piperidinol and 1-tridecanol,
   a mixed esterified product of 1,2,3,4-butanetetracarboxylic acid with 2,2,6,6-tetramethyl-4-piperidinol and 1-tridecanol, a mixed esterified product of 1,2,3,4-butanetetracarboxylic acid with 1,2,2,6,6-pentamethyl-4-piperidinol and 3,9-bis(2-hydroxy-1,1-dimethylethyl)-2,4,8,10-tetraoxaspiro[5·5]undecane, a mixed esterified product of 1,2,3,4-butanetetracarboxylic acid with 2,2,6,6-tetramethyl-4-piperidinol and 3,9-bis(2-hydroxy-1,1-dimethylethyl)-2,4,8,10-tetraoxaspiro[5·5]undecane, a polycondensate of dimethyl succinate and 1-(2-hydroxyethyl)-4-hydroxy-2,2,6,6-tetramethylpiperidine, poly[(6-morpholino-1,3,5-triazin-2,4-diyl) ((2,2,6,6-tetramethyl-4-piperidyl)imino)hexamethylene((2,2,6,6-tetramethyl-4-piperidyl)imino)], poly[(6-(1,1,3,3-tetramethylbutyl)imino-1,3,5-triazin-2,4-diyl((2,2,6,6-tetramethyl-4-piperidyl)imino)hexamethylene((2,2,6,6-tetramethyl-4-piperidyl)imino)], a polycondensate of N,N'-bis(2,2,6,6-tetramethyl-4-piperidyl)hexamethylenediamine and 1,2-dibromoethane, N,N',4,7-tetrakis[4,6-bis(N-butyl-N-(2,2,6,6-tetramethyl-4-piperidyl)amino)-1,3,5-triazin-2-yl]-4,7-diazadecane-1,10-diamine, N,N',4-tris[4,6-bis(N-butyl-N-(2,2,6,6-tetramethyl-4-piperidyl)amino)-1,3,5-triazin-2-yl]-4,7-diazadecane-1,10-diamine, N,N',4,7-tetrakis[4,6-bis(N-butyl-N-(1,2,2,6,6-pentamethyl-4-piperidyl)amino)-1,3,5-triazin-2-yl]-4,7-diazadecane-1,10-diamine, N,N',4-tris[4,6-bis(N-butyl-N-(1,2,2,6,6-pentamethyl-4-piperidyl)amino)-1,3,5-triazin-2-yl]-4,7-diazadecane-1,10-diamine and mixtures thereof, and the like.
(2) Examples of Acrylate-Based Light Stabilizers
   Ethyl α-cyano-β,β-diphenyl acrylate, isooctyl α-cyano-β,β-diphenyl acrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate, and N-(β-carbomethoxy-β-cyanovinyl)-2-methylindoline, and mixtures thereof, and the like.
(3) Examples of Nickel-Based Light Stabilizers
   The nickel complex of 2,2'-thiobis-[4-(1,1,3,3-tetramethylbutyl)phenol], nickel dibutyldithiocarbamate, nickel salts of monoalkyl esters, nickel complexes of ketoximes, and mixtures thereof, and the like.
(4) Examples of Oxamide-Based Light Stabilizers
   4,4'-Dioctyloxyoxanilide, 2,2'-diethoxyoxanilide, 2,2'-dioctyloxy-5,5'-di-t-butylanilide, 2,2'-didodecyloxy-5,5'-di-t-butylanilide, 2-ethoxy-2'-ethyloxanilide, N,N'-bis(3-dimethylaminopropyl)oxamide, 2-ethoxy-5-t-butyl-2'-ethoxyanilide, 2-ethoxy-5,4'-di-t-butyl-2'-ethyloxanilide, and mixtures thereof, and the like.
(5) Examples of 2-(2-Hydroxyphenyl)-1,3,5-triazine-Based Light Stabilizers
   2,4,6-Tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-[2,4-dihydroxyphenyl-4,6-bis(2,4-dimethylphenyl]-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethylphenyl)-1,3,5-triazine, 2-[2-hydroxy-4-(2-hydroxy-3-octyloxypropoxy)phenyl]-4,6-bis(2,4-dimethylphenyl)-1,3,5-triazine, and mixtures thereof, and the like.

Examples of the metal deactivator include the following.

N,N'-diphenyloxamide, N-salicylal-N'-salicyloylhydrazine, N,N'-bis(salicyloyl)hydrazine, N,N'-bis(3,5-di-t-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenyl hydrazide, N,N'-bis(salicyloyl)oxalyl dihydrazide, N,N'-bis(salicyloyl)thiopropionyl dihydrazide and mixtures thereof, and the like.

Examples of the peroxide scavenger include esters of β-thiodipropionic acid, mercaptobenzimidazole, the zinc salt of 2-mercaptobenzimidazole, the zinc salt of dibutyldithiocarbamic acid, dioctadecyl disulfide, pentaerythritol tetrakis(β-dodecylmercapto)propionate, and mixtures thereof.

Examples of the polyamide stabilizers include copper or divalent manganese salts of iodides or phosphorus compounds, and mixtures thereof.

Examples of the hydroxyamine include N,N-dibenzylhydroxyamine, N,N-diethylhydroxyamine, N,N-dioctylhydroxyamine, N,N-dilaurylhydroxyamine, N,N-ditetradecylhydroxyamine, N,N-dihexadecylhydroxyamine, N,N-dioctadecylhydroxyamine, N-hexadecyl-N-octadecylhydroxyamine, N-heptadecyl-N-octadecylhydroxyamine and mixtures thereof, and the like.

Examples of the neutralizing agent include calcium stearate, zinc stearate, magnesium stearate, hydrotalcite (basic magnesium aluminum hydroxycarbonate hydrate), melamine, amine, polyamides, polyurethanes and mixtures thereof, and the like.

Examples of the lubricant include aliphatic hydrocarbons such as paraffins and waxes, higher fatty acids having 8 to 22 carbon atoms, metal (Al, Ca, Mg, and Zn) salts of higher fatty acids having 8 to 22 carbon atoms, aliphatic alcohols having 8 to 22 carbon atoms, polyglycols, esters of higher fatty acids having 4 to 22 carbon atoms and aliphatic monohydric alcohols having 4 to 18 carbon atoms, higher aliphatic amides having 8 to 22 carbon atoms, silicone oils, and rosin derivatives.

Examples of the nucleating agent include the following: sodium 2,2'-methylenebis(4,6-di-t-butylphenyl) phosphate, dihydroxyaluminum [2,2'-methylenebis(4,6-di-t-butylphenyl) phosphate], hydroxyaluminum bis[2,2'-methylenebis(4,6-di-t-butylphenyl) phosphate], aluminum tris[2,2'-methylenebis(4,6-di-t-butylphenyl) phosphate], sodium bis(4-t-butylphenyl) phosphate, metal salts of benzoates such as sodium benzoate, aluminum p-t-butylbenzoate, 1,3:2,4-bis(O-benzylidene) sorbitol, 1,3:2,4-bis(O-methylbenzylidene) sorbitol, 1,3:2,4-bis(O-ethylbenzylidene) sorbitol, 1,3-0-3,4-dimethylbenzylidene-2,4-O-benzylidene sorbitol, 1,3-0-benzylidene-2,4-O-3,4-dimethylbenzylidene sorbitol, 1,3:2,4-bis(O-3,4-dimethylbenzylidene) sorbitol, 1,3-O-p-chlorobenzylidene-2,4-O-3,4-dimethylbenzylidene sorbitol, 1,3-O-3,4-dimethylbenzylidene-2,4-O-p-chlorobenzylidene sorbitol, 1,3:2,4-bis(O-p-chlorobenzylidene) sorbitol, and mixtures thereof.

Examples of the filler include calcium carbonate, silicates, glass fibers, asbestos, talc, kaolin, mica, barium sulfate, carbon black, carbon fibers, zeolite, and mixtures thereof.

Among these additives, those preferably used are phenol-based antioxidants, phosphorus-based antioxidants, ultraviolet absorbing agents, hindered amine-based light stabilizers, peroxide scavengers and neutralizing agents.

Examples of particularly preferred phenol-based antioxidants include the following compounds.

2,2'-thiobis(6-t-butylphenol), 4,4'-thiobis(3-methyl-6-t-butylphenol), 2,2'-methylenebis(4-methyl-6-t-butylphenol), 2,2'-methylenebis(4-ethyl-6-t-butylphenol), 2,2'-methylenebis[4-methyl-6-(α-methylcyclohexyl)phenol], 2,2'-methylenebis(4-methyl-6-cyclohexylphenol), 2,2'-methylenebis(4,6-di-t-butylphenol), 2,2'-ethylydenebis(4,6-di-t-butylphenol), 4,4'-methylenebis(6-t-butyl-2-methylphenol), 4,4'-methylenebis(2,6-di-t-butylphenol), 4,4'-butylidenebis(3-methyl-6-t-butylphenol), 1,1-bis(4-hydroxyphenyl)cyclohexane, 1,1-bis(5-t-butyl-4-hydroxy-2-methylphenyl)butane, 1,1,3-tris(5-t-butyl-4-hydroxy-2-methylphenyl)butane, ethylene glycol bis[3,3-bis(3'-t-butyl-4'-hydroxyphenyl)butyrate], 2-t-butyl-6-(3'-t-butyl-5'-methyl-2'-hydroxybenzyl)-4-methylphenyl acrylate, 2,4-di-t-pentyl-6-[1-(2-hydroxy-3,5-di-t-pentylphenyl)ethyl]phenyl acrylate,
2,4,6-tris(3,5-di-t-butyl-4-phenoxy)-1,3,5-triazine, tris(4-t-butyl-3-hydroxy-2,6-dimethylbenzyl)isocyanurate, bis(3,5-di-t-butyl-4-hydroxybenzyl) isocyanurate, tris[2-(3',5'-di-t-butyl-4'-hydroxycinnamoyloxy)ethyl]isocyanurate, diethyl-3,5-di-t-butyl-4-hydroxybenzylphosphonate, di-n-octadecyl-3,5-dit-butyl-4-hydroxybenzylphosphonate, a calcium salt of 3,5-di-t-butyl-4-hydroxybenzylphosphonic acid monoester, n-octadecyl 3-(3,5-di-t-butyl-4-hydroxyphenyl)propionate, neopentane tetrayltetrakis(3,5-di-t-butyl-4-hydroxycinnamate), thiodiethylenebis(3,5-di-t-butyl-4-hydroxycinnamate), 1,3,5-trimethyl-2,4,6-tris(3,5-di-t-butyl-4-hydroxybenzyl)benzene, 3,6-dioxaoctamethylenebis(3,5-di-t-butyl-4-hydroxycinnamate), hexamethylenebis(3,5-di-t-butyl-4-hydroxycinnamate), triethylene glycol bis(5-t-butyl-4-hydroxy-3-methylcinnamate), N,N'-bis[3-(3',5'-di-t-butyl-4'-hydroxyphenyl)propionyl]hydrazine, N,N'-bis[3-(3',5'-dit-butyl-4'-hydroxyphenyl)propionyl]hexamethylenediamine, and the like.

Examples of particularly preferred phosphorus-based antioxidants include the following compounds.
tris(nonylphenyl)phosphite, tris(2,4-di-t-butylphenyl) phosphite, distearyl pentaerythritol diphosphite, bis(2,4-di-t-butylphenyl)pentaerythritol diphosphite, bis(2,4-di-t-butyl-6-methylphenyl)pentaerythritol diphosphite, bis(2,6-di-t-butyl-4-methylphenyl)pentaerythritol diphosphite, tetrakis(2,4-di-t-butylphenyl)-4,4'-diphenylene diphosphite, 2,2'-methylenebis(4,6-di-t-butylphenyl) 2-ethylhexyl phosphite, 2,2'-ethylidenebis(4,6-di-t-butylphenyl) fluorophosphite, bis(2,4-di-t-butyl-6-methylphenyl) ethylphosphite, 2-(2,4,6-tri-t-butylphenyl)-5-ethyl-5-butyl-1,3,2-oxaphosphorinane, 2,2',2"-nitrilo[triethyl-tris(3,3',5,5'-tetra-t-butyl-1,1'-biphenyl-2,2'-diyl)phosphite, 6-[3-(3-t-butyl-4-hydroxy-5-methylphenyl)propoxy]-2,4,8,10-tetra-t-butyldibenzo[d,f][1,3,2]dioxaphosphepine, and the like.

Examples of particularly preferred ultraviolet absorbing agents include the following compounds.
phenyl salicylate, 4-t-butylphenyl salicylate, 2,4-di-t-butylphenyl 3',5'-di-t-butyl-4'-hydroxybenzoate, 4-t-octylphenyl salicylate, 2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone, 2-(2-hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-s-butyl-2'-hydroxy-5'-t-butylphenyl)benzotriazole, 2-(2'-hydroxy-4'-octyloxyphenyl)benzotriazole, 2-(3',5'-di-t-amyl-2'-hydroxyphenyl)benzotriazole, 2-[2'-hydroxy-3',5'-bis(α,α-dimethylbenzyl)phenyl]-2H-benzotriazole, and the like.

Examples of particularly preferred light stabilizers include the following compounds.
bis(2,2,6,6-tetramethyl-4-piperidyl)sebacate, bis(1,2,2,6,6-pentamethyl-4-piperidyl)sebacate, bis(N-octoxy-2,2,6,6-tetramethyl-4-piperidyl)sebacate, bis(N-benzyloxy-2,2,6,6-tetramethyl-4-piperidyl) sebacate, bis(N-cyclohexyloxy-2,2,6,6-tetramethyl-4-piperidyl)sebacate, bis(1,2,2,6,6-pentamethyl-4-piperidyl) 2-(3,5-di-t-butyl-4-hydroxybenzyl)-2-butyl malonate, bis(1-acroyl-2,2,6,6-tetramethyl-4-piperidyl) 2,2-bis(3,5-di-t-butyl-4-hydroxybenzyl)-2-butyl malonate, bis(2,2,6,6-tetramethyl-4-piperidyl)succinate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2,6,6-tetramethylpiperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) 1,2,3,4-butanetetracarboxylate,
tetrakis(1,2,6,6-pentamethyl-4-piperidyl) 1,2,3,4-butanetetracarboxylate, a mixed esterified product of 1,2,3,4-butanetetracarboxylic acid with 1,2,2,6,6-pentamethyl-4-piperidinol and 1-tridecanol, a mixed esterified product of 1,2,3,4-butanetetracarboxylic acid with 2,2,6,6-tetramethyl-4-piperidinol and 1-tridecanol, a mixed esterified product of 1,2,3,4-butanetetracarboxylic acid with 1,2,2,6,6-pentamethyl-4-piperidinol and 3,9-bis(2-hydroxy-1,1-dimethylethyl)-2,4,8,10-tetraoxaspiro[5·5]undecane, a mixed esterified product of 1,2,3,4-butanetetracarboxylic acid with 2,2,6,6-tetramethyl-4-piperidinol and 3,9-bis(2-hydroxy-1,1-dimethylethyl)-2,4,8,10-tetraoxaspiro[5·5]undecane, a polycondensate of dimethyl succinate and 1-(2-hydroxyethyl)-4-hydroxy-2,2,6,6-tetramethylpiperidine, poly[(6-morpholino-1,3,5-triazin-2,4-diyl) ((2,2,6,6-tetramethyl-4-piperidyl)imino)hexamethylene((2,2,6,6-tetramethyl-4-piperidyl)imino)], poly[(6-(1,1,3,3-tetramethylbutyl)-1,3,5-triazin-2,4-diyl) ((2,2,6,6-tetramethyl-4-piperidyl)imino)hexamethylene((2,2,6,6-tetramethyl-4-piperidyl)imino)], and the like.

The stabilizer of the present invention, or the compound (A) selected from the group consisting of the compound represented by formula (1) and the compound represented by formula (2) and the compound (B) represented by formula (3) at a specified ratio, and also other additives as needed can be added to the organic material using any known method and apparatus for providing a homogeneous mixture. For example, description will now be made for a case where the stabilizer of the present invention is added. When the organic material is a solid polymer, the stabilizer of the present invention and/or other additives as needed can be directly dry-blended with the solid polymer or the stabilizer of the present invention and/or other additive as needed can also be added in the form of a master batch, to the solid polymer. When the organic material is a liquid polymer, the method of addition as described above can be used, or the stabilizer of the present invention and/or other additives as needed can also be compounded in the form of a solution or a dispersion and added to a polymer solution during polymerization or immediately after polymerization. On the other hand, when the organic material is a liquid (for example, oil) other than the solid polymer, the method of addition as described above can be used, or the stabilizer of the present invention and/or other additives as needed can also be directly added to the organic material and thus dissolved, or can also be dissolved or suspended in a liquid medium, followed by adding the resultant in such a dissolved or suspended state.

The stabilizer of the present invention has excellent performance, as a stabilizer for various organic materials including thermoplastic resins such as polyolefin. An organic material to which the stabilizer of the present invention is added, and an organic material to which the compound (A) selected from the group consisting of the compound represented by formula (1) and the compound represented by formula (2) at a specified ratio and the compound (B) represented by formula (3) are added has favorable processing stability. Furthermore, the change in color of such an organic material due to oxidized gas can be prevented. Such an organic material serves as a high-quality product that is not only stable against thermal degradation, oxidization degradation, and/or the like during production, during processing and during use, but also suppressed in the change in color due to oxidized gas.

In the stabilizer of the present invention, the stabilizer can be added to the organic material, to reduce degradation during processing of the organic material and enhance processing stability. Furthermore, the stabilizer of the present invention can be prevented in the change in color due to oxidized gas, in particular, due to NOx gas. Therefore, the stabilizer of the present invention is suitable as an active component of a stabilizer for organic materials. Accordingly, the present invention also provides a stabilizer including a compound (A) selected from the group consisting of a compound represented by formula (1) and a compound represented by formula (2), and a compound (B) represented by formula (3) at a specified ratio, and a method for stabilizing an organic material, the method including adding the stabilizer of the present invention or the compounds (A) and (B) to an organic material. Furthermore, the present invention also provides a stabilized resin composition including an organic material, and the stabilizer of the present invention or the compounds (A) and (B).

### Examples

The present invention will be more specifically described below by way of Examples and Comparative Examples, but the present invention is not limited thereto at all. In the following Examples and Comparative Examples, "part(s)" means "part(s) by weight", unless particularly noted.

### <Components>

Components used in Examples and Comparative Examples are described below.

### (Thermoplastic Resin)

· Low density polyethylene resin (LLDPE) (MI value: 2 g/10 min, manufactured by Sumitomo Chemical Co., Ltd.) (Stabilizers)
· Compound A-1:
   2,4,8,10-tetra-t-butyl-6-[3-(3-methyl-4-hydroxy-5-t-butylphenyl)propoxy]dibenzo[d,f][1,3,2]dioxaphosphepine(S umilizer (R) GP, manufactured by Sumitomo Chemical Co., Ltd.)
· Compound A-2: phosphite compound obtained in Production Example 1
· Compound A-3: mixture (WESTON (R) 705, manufactured by SI Group, Inc.) of tris(4-t-amylphenyl)phosphite, bis(4-t-amylphenyl)-2,4-di-t-amylphenylphosphite, and bis(2,4-di-t-amylphenyl)-4-t-amylphenylphosphite
· Compound B: 2,4-di-t-butylphenol (manufactured by Tokyo Chemical Industry Co., Ltd.)
· Compound C: stearyl 3-(3,5-di-t-butyl-4-hydroxyphenyl)propionate (IRGANOX 1076, manufactured by BASF SE)

### (Production Example 1: production of compound A-2)

300 g of cashew oil (Cardolite Corporation, NX-2025), 114 g (1.11 mol) of triethylamine, and 790 ml of hexane were placed in a four-necked separable flask, and then 200 mL of a solution of 49.1 g (0.35 mol) of phosphorus trichloride in hexane was dropped under a nitrogen atmosphere over 50 minutes so that the solution temperature was in the range of 30 to 40°C. After the completion of the dropping, the mixture was stirred at a solution temperature of 30°C for 4 hours. After the completion of the stirring, the mixture was washed with 0.65 L of purified water twice and 0.65 L of a saturated saline solution once. The resulting organic layer was dried with sodium sulfate, the sodium sulfate was removed by filtration and thereafter the resultant was concentrated and dried to obtain 285 g of a compound A-2 having a structure represented by the following formula (A-2). In formula (A-2), for example, -H/OH means -H or -OH, and the same also applies to others.

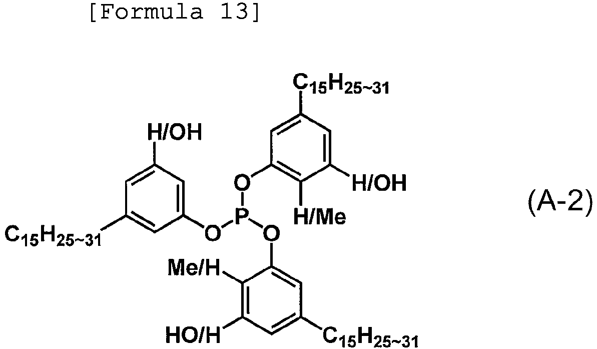

### (Example 1)

100 Parts of LLDPE, 0.05 parts of calcium stearate (manufactured by Nitto Chemical Industry Co., Ltd.), 0.0500 parts of the compound A-1, and 0.0010 parts of the compound B were dry-blended, and the obtained mixture was kneaded under a nitrogen atmosphere under the conditions of a temperature of 190°C and a screw rotation speed of 80 rpm using a twin-screw extruder having a cylinder diameter of 32 mm (BTN-32, PLABOR) to obtain pellets.

### (Examples 2 to 4 and Comparative Examples 1 to 4)

Pellets of Examples 2 to 4 and Comparative Examples 1 to 3 were obtained in the same manner as in Example 1 except that the compound A-1, the compound B, and/or the compound C were/was dry-blended in the amount(s) added as described in Table 1. Pellets of Comparative Example 4 were obtained in the same manner as in Example 1 except that the compound A-1, the compound B, or the compound C was added.

### (NOx Resistance)

The pellets obtained in each of Examples 1 to 4 and Comparative Examples 1 to 4 were pressed using a pressing machine ("PEW-5040" manufactured by Kansai Roll Co., Ltd.) under the condition of a temperature of 190°C to obtain a sheet having a thickness of 1 mm. The obtained sheet was cut to a size of 4 cm in length × 4 cm in width using a lever-type sample cutter ("SDL-200" manufactured by Dumbbell Co., Ltd.) to obtain a test piece.

The obtained test piece was suspended in a nitrogen oxide gas tester ("GF-5" manufactured by Suga Test Instruments Co., Ltd.). NOx gas generated according to JIS L 0855 (1998) was collected in a gas buret, and 10 mL of the collected NOx gas was taken by a gas syringe and injected into the nitrogen oxide gas tester. After the test piece was exposed to the injected NOx gas under room temperature for 7 days, the test piece was taken out, and the yellow index (YI) thereof was measured using a colorimeter ("CM-3500d" manufactured by Konica Minolta Japan, Inc.). The ratio of the YI of the obtained test piece and the YI of the test piece obtained in Comparative Example 1 (YI of test piece of Example or Comparative Example/YI of test piece obtained in Comparative Example 1) was calculated. A ratio of less than 1 means excellent NOx resistance. The NOx resistance was evaluated based on the obtained YI ratio, according to the following criteria. The results are shown in Table 1.

### Evaluation Criteria of NOx Resistance

○: less than 1.0
×: 1.0 or more

### (Processing Stability)

The melt flow rates (MFR) of the pellets obtained in Examples 1 to 4 and Comparative Examples 1 to 4 were measured.

The MFR (g/10 min) was measured under the conditions of a temperature of 190°C and a load of 21.18 N using a melt indexer (model L246-3537, manufactured by TECHNOL SEVEN CO., LTD.). For LLDPE, there is a tendency that processing LLDPE by heat promotes crosslinking to thereby decrease its MFR. Therefore, as the MFR of the pellets of LLDPE after extrusion by the twin-screw extruder is higher, the processing stability is more favorable. The processing stability was evaluated based on the obtained MFR, according to the following criteria. The results are shown in Table 2.

### Evaluation Criteria of Processing Stability

○: 2.0 or more
×: less than 2.0

**[Table 1]**

| | Amount added per 100 parts by mass of organic material (Amount of B per 100 parts by mass of A) | | | NOx resistance | | Processing stability | |
|---|---|---|---|---|---|---|---|
| | A-1 | B | C | Ratio in YI value | Evaluation | MFR | Evaluation |
| Example 1 | 0.0500 | 0.0010 (2) | - | 0.97 | ○ | 2.31 | ○ |
| Example 2 | 0.0505 | 0.0005 (1) | - | 0.93 | ○ | 2.30 | ○ |
| Example 3 | 0.0509 | 0.0001 (0.2) | - | 0.99 | ○ | 2.34 | ○ |
| Example 4 | 0.0500 | 0.01 (20) | - | 0.93 | ○ | 2.29 | ○ |
| Comparative Example 1 | 0.0510 | - | - | 1.00 | × | 2.30 | O |
| Comparative Example 2 | 0.0500 | - | 0.0010 | 1.06 | × | 2.32 | O |
| Comparative Example 3 | - | 0.0510 | - | 1.07 | × | 2.15 | O |
| Comparative Example 4 | - | - | - | 0.25 | ○ | 1.90 | × |

### (Example 5)

Pellets were obtained in the same manner as in Example 1 except that the compound A-2 was used instead of the compound A-1.

### (Examples 6 to 7 and Comparative Examples 5 to 6)

Pellets were obtained in the same manner as in Example 5 except that the compound A-2, the compound B, and/or the compound C were/was dry-blended in the amount(s) added as described in Table 2.

The YI ratio (YI of test piece of Example or Comparative Example/YI of test piece obtained in Comparative Example 5) was calculated for the pellets obtained in each of Examples 5 to 7 and Comparative Examples 5 to 6 according to the evaluation method described in (NOx resistance) above and also evaluated according to the same evaluation criteria. In addition, the processing stability was evaluated by measuring the MFR according to the above evaluation method. The results obtained are shown in Table 2.

**[Table 2]**

| | Amount added per 100 parts by mass of organic material (Amount of B per 100 parts by mass of A) | | | NOx resistance | | Processing stability | |
|---|---|---|---|---|---|---|---|
| | A-2 | B | C | Ratio in YI value | Evaluation | MFR | Evaluation |
| Example 5 | 0.0500 | 0.0010 (2) | - | 0.89 | ○ | 2.31 | ○ |
| Example 6 | 0.0505 | 0.0005 (1) | - | 0.82 | ○ | 2.30 | ○ |
| Example 7 | 0.0509 | 0.0001 (0.2) | - | 0.98 | ○ | 2.26 | ○ |
| Comparative Example 5 | 0.0510 | - | - | 1.00 | × | 2.30 | ○ |
| Comparative Example 6 | 0.0500 | - | 0.0010 | 1.35 | × | 2.27 | O |

### (Example 8)

Pellets were obtained in the same manner as in Example 1 except that the compound A-3 was used instead of the compound A-1.

### (Example 9 and Comparative Examples 7 to 8)

Pellets were obtained in the same manner as in Example 8 except that the compound A-3, the compound B, and/or the compound C were/was dry-blended in the amount(s) added as described in Table 3.

The YI ratio (YI of test piece of Example or Comparative Example/YI of test piece obtained in Comparative Example 7) was calculated for the pellets obtained in each of Examples 8 to 9 and Comparative Examples 7 to 8 according to the evaluation method described in (NOx resistance) above and also evaluated according to the same following criteria. In addition, the processing stability was evaluated by measuring the MFR according to the above evaluation method. The results obtained are shown in Table 3.

**[Table 3]**

| | Amount added per 100 parts by mass of organic material (Amount of B per 100 parts by mass of A) | | | NOx resistance | | Processing stability | |
|---|---|---|---|---|---|---|---|
| | A-3 | B | C | Ratio in YI value | Evaluation | MFR | Evaluation |
| Example 8 | 0.0500 | 0.0010 (2) | - | 0.93 | ○ | 2.30 | ○ |
| Example 9 | 0.0509 | 0.0001 (0.2) | - | 0.96 | ○ | 2.26 | ○ |
| Comparative Example 7 | 0.0510 | - | - | 1.00 | × | 2.24 | ○ |
| Comparative Example 8 | 0.0500 | - | 0.0010 | 1.29 | × | 2.28 | O |

It has been confirmed that an organic material to which a compound (A) selected from the group consisting of a compound represented by formula (1) and a compound represented by formula (2) and a compound (B) represented by formula (3) are added at a specified ratio not only is favorable in processing stability, but also can be prevented from changing in color of the organic material due to oxidized gas.

The compound A and the compound B were each added to LLDPE in the above Examples. In this regard, the compound A and the compound B may be first mixed by dryblending under the same quantitative relationship to obtain the stabilizer of the present invention, and then the stabilizer may be added to LLDPE. Even in this case, it is considered that the same results as shown in Examples are obtained.

## Claims

1. A stabilizer comprising:
(A) a compound selected from the group consisting of a compound represented by formula (1): 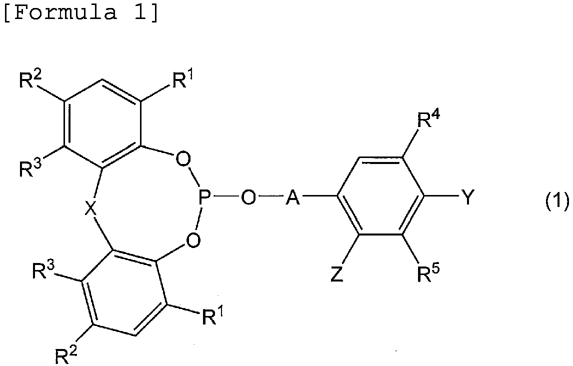 wherein
R¹, R², R⁴ and R⁵ each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group,
R³ each independently represents a hydrogen atom or an alkyl group having 1 to 8 carbon atoms,
X represents a single bond, a sulfur atom or a group -CH(-R¹³)-, wherein R¹³ represents a hydrogen atom, an alkyl group having 1 to 8 carbon atoms or a cycloalkyl group having 5 to 8 carbon atoms,
A represents an alkylene group having 1 to 8 carbon atoms or a group *-C(=O)-R¹⁴-, wherein R¹⁴ represents a single bond or an alkylene group having 1 to 8 carbon atoms, and * represents a bond to oxygen,
any one of Y and Z represents a hydroxyl group, an alkoxy group having 1 to 8 carbon atoms or an aralkyloxy group having 7 to 12 carbon atoms, and the other thereof represents a hydrogen atom or an alkyl group having 1 to 8 carbon atoms,
and a compound represented by formula (2): 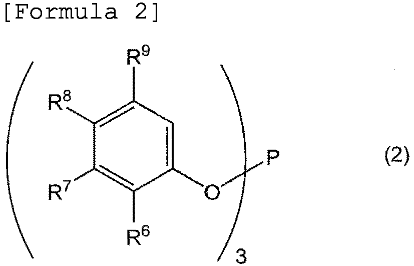
wherein
R⁶ and R⁸ each independently represent a hydrogen atom, a methyl group, or an alkyl group having 5 to 8 carbon atoms,
R⁷ each independently represents a hydrogen atom or a hydroxyl group,
R⁹ each independently represents a hydrogen atom or a group -C₁₅H₂₅₋₃₁,
provided that at least one R⁶, R⁷, R⁸ or R⁹ is not a hydrogen atom, and
(B) a compound represented by formula (3): 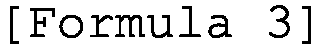 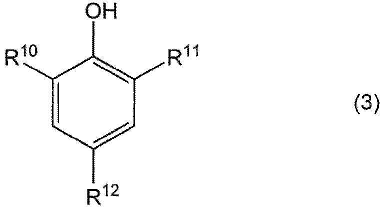 wherein R¹⁰, R¹¹ and R¹² each independently represent a hydrogen atom, an alkyl group having 1 to 12 carbon atoms, or an arylalkyl group having 7 to 20 carbon atoms in total, provided that at least one of R¹⁰, R¹¹ and R¹² is not a hydrogen atom, wherein
a content of the compound (B) is 0.01 to 50 parts by mass per 100 parts by mass of the compound (A).

2. The stabilizer according to claim 1, wherein, in formula (2),
R⁶ each independently represents a hydrogen atom or a methyl group,
R⁷ each independently represents a hydrogen atom or a hydroxyl group,
R³ represents a hydrogen atom, and
R⁹ each independently represents a group -C₁₅H₂₅₋₃₁.

3. The stabilizer according to claim 1, wherein, in formula (2),
R⁶ and R⁸ each independently represent a hydrogen atom or an alkyl group having 5 to 8 carbon atoms; provided that at least one R⁶ or R⁸ is not a hydrogen atom, and R⁷ and
R⁹ represent a hydrogen atom.

4. The stabilizer according to any one of claims 1 to 3, wherein, in formula (3), R¹¹ represents a hydrogen atom.

5. An organic material composition comprising the compound (A) and the compound (B) or the stabilizer according to claim 1, and at least one organic material, wherein a content of the compound (B) is 0.01 to 50 parts by mass per 100 parts by mass of the compound (A).

6. The organic material composition according to claim 5, wherein a content of the compound (A) is 0.01 to 1 part by mass per 100 parts by mass of the organic material, and a content of the compound (B) is 0.0001 to 0.5 parts by mass per 100 parts by mass of the organic material.

7. The organic material composition according to claim 5 or 6, wherein the organic material is a thermoplastic resin.

8. The organic material composition according to claim 7, wherein the thermoplastic resin is a polyolefin or an engineering plastic.

9. A method for stabilizing an organic material, comprising adding the compound (A) and the compound (B) or the stabilizer according to claim 1 to an organic material, wherein a content of the compound (B) is 0.01 to 50 parts by mass per 100 parts by mass of the compound (A) .

10. The stabilizing method according to claim 9, wherein the organic material is a thermoplastic resin.

11. The stabilizing method according to claim 10,
wherein the thermoplastic resin is a polyolefin or an engineering plastic.
